(19) Europäisches Patentamt
European Patent Office
Office européen des brevets

(11) EP 4 464 820 A1

(12) **EUROPÄISCHE PATENTANMELDUNG**

(43) Veröffentlichungstag:
**20.11.2024 Patentblatt 2024/47**

(21) Anmeldenummer: **24173988.7**

(22) Anmeldetag: **03.05.2024**

(51) Internationale Patentklassifikation (IPC):
*C25B 1/04 (2021.01)* *C25B 9/23 (2021.01)*
*C25B 9/75 (2021.01)* *C25B 9/77 (2021.01)*
*C25B 11/031 (2021.01)* *C25B 11/042 (2021.01)*
*C25B 11/046 (2021.01)* *C25B 11/052 (2021.01)*
*C25B 11/061 (2021.01)* *C25B 11/075 (2021.01)*
*C25B 11/089 (2021.01)*

(52) Gemeinsame Patentklassifikation (CPC):
**C25B 1/04; C25B 9/23; C25B 9/75; C25B 9/77; C25B 11/031; C25B 11/042; C25B 11/046; C25B 11/052; C25B 11/061; C25B 11/075; C25B 11/089**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **15.05.2023 EP 23173271**

(71) Anmelder: **Evonik Operations GmbH**
**45128 Essen (DE)**

(72) Erfinder:
- **Maljusch, Artjom**
  **44866 Bochum (DE)**
- **Borowski, Patrick**
  **46238 Bottrop (DE)**
- **Elkemann, Ines**
  **48653 Coesfeld (DE)**
- **Roters, Philipp**
  **48653 Coesfeld (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

# (54) STRUKTURELLER AUFBAU EINER ELEKTROCHEMISCHEN ZELLE

(57) Die vorliegende Erfindung betrifft eine elektrochemische Zelle (0) umfassend eine Anode (1), eine Kathode (2) und eine zwischen Anode (1) und Kathode (2) angeordnete, Anionen leitende Membran (3). Außerdem betrifft sie den Einsatz der elektrochemischen Zelle (0) in einem Verfahren zur Herstellung von Wasserstoff ($H_2$) und Sauerstoff ($O_2$) durch elektrochemische Spaltung von Wasser ($H_2O$). Darüber hinaus betrifft die Erfindung einen Elektrolyseur (6), der eine Vielzahl der Zellen (0) aufweist und ein Verfahren zur Herstellung des Elektrolyseurs (6). Ihr liegt die Aufgabe zu Grunde, eine elektrochemische Zelle (0) anzugeben, mit der sich im industriellen Maßstab eine AEM basierte Wasserspaltung durchführen lässt. Die Zelle soll geringe Herstellungskosten verursachen, raumsparend bauen und eine energieeffiziente Produktion von Wasserstoff und Sauerstoff in großen Mengen ermöglichen. Gelöst wird die Aufgabe dadurch, dass die Anode teilweise oder vollständig als ein erster poröser Sinterkörper (1) ausgeführt ist, welcher Körner umfasst, die an ihren Korngrenzen miteinander verschmolzen sind, und dass der erste poröse Sinterkörper unmittelbar an die Membran (3) kontaktiert ist.

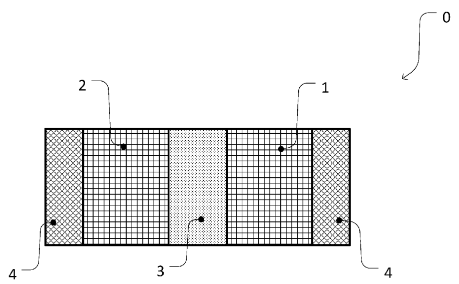

Fig. 1a

EP 4 464 820 A1

## Beschreibung

Die vorliegende Erfindung betrifft eine elektrochemische Zelle umfassend eine Anode, eine Kathode und eine zwischen Anode und Kathode angeordnete, Anionen leitende Membran. Außerdem betrifft sie den Einsatz der elektrochemischen Zelle in einem Verfahren zur Herstellung von Wasserstoff und Sauerstoff durch elektrochemische Spaltung von Wasser. Darüber hinaus betrifft die Erfindung einen Elektrolyseur, der eine Vielzahl der Zellen aufweist und ein Verfahren zur Herstellung des Elektrolyseurs.

Elektrochemische Zellen werden zur Durchführung elektrochemischer Verfahren verwendet. Es gibt eine Vielzahl elektrochemischer Verfahren mit sehr unterschiedlichen Zielsetzungen. Ein bedeutendes elektrochemisches Verfahren ist das Lösen chemischer Verbindungen. Dieses Verfahren wird Elektrolyse genannt.

Die technische Implementierung einer elektrochemischen Zelle zur Durchführung von Elektrolysen wird Elektrolyseur genannt. Ein Elektrolyseur enthält meist eine Vielzahl verschalteter elektrochemischer Zellen.

Eine elektrochemische Zelle weist mindestens zwei Elektroden auf, nämlich eine Anode und eine Kathode. Meist ist die Zelle von einem elektrisch isolierenden Separator in zwei Kompartimente aufgeteilt. Die Anode befindet sich in dem ersten, "anodischen" Kompartiment, die Kathode in dem zweiten, "kathodischen" Kompartiment. Die beiden Elektroden bzw. Kompartimente sind durch den Separator voneinander elektrisch getrennt. Die elektrochemische Zelle wird mit Elektrolyt befüllt.

Ein bedeutendes elektrochemisches Verfahren ist die Herstellung von Wasserstoff und Sauerstoff durch elektrochemische Spaltung von Wasser. Eine Variante der Wasserspaltung ist durch die Verwendung einer Anionen leitenden Membran (Anionenaustauschmembran, engl. anion exchange membrane, AEM) als Separator gekennzeichnet. Es wird gemeinhin als AEM basierte Wasserspaltung (engl. AEM water electrolysis, AEMWE) bezeichnet. Da die Reaktion im alkalischen Milieu erfolgt, wird die AEM basierte Wasserspaltung auch oft alkalische Membranwasserelektrolyse (engl. alkaline membrane water electrolysis) genannt.

Bei der AEM basierten Wasserspaltung wird eine elektrochemische Zelle mit Wasser beziehungsweise mit einem basischen Elektrolyten auf Wasserbasis gefüllt und eine Spannung zwischen Anode und Kathode angelegt. Auf Kathodenseite wird das Wasser ($H_2O$ ) in Wasserstoff ($H_2$) und Hydroxid-Ionen ($OH^-$) zerlegt (Gleichung K). Die Anionenaustauschmembran transportiert die Hydroxid-Ionen auf die Anodenseite, wo diese zu Sauerstoff ($O_2$) oxidiert werden (Gleichung A). Auf diese Weise entsteht auf der Anodenseite Sauerstoff, währenddessen das Wasserstoff auf der Kathodenseite entsteht. Folglich wird die Anodenseite auch Sauerstoffseite genannt, währenddessen die Kathodenseite auch Wasserstoffseite heißt.

$$2\ H_2O + 2\ e- \rightarrow H_2 + 2\ OH- \text{ (K) Reduktion / Kathodenreaktion}$$

$$2\ OH- \rightarrow ½\ O_2 + H_2O + 2\ e- \text{ (A) Oxidation / Anodenreaktion}$$

Um den beschriebenen Effekt zu ermöglichen, muss die Membran zwischen Anode und Kathode die Hydroxid-Ionen leiten. Zugleich muss sie elektrisch isolieren, damit es nicht zu einem elektrischen Kurzschluss zwischen Anode und Kathode kommt. Schließlich muss die Anionen leitende Membran nach Möglichkeit gasdicht sein, damit es nicht zu einer Rückvermischung der entstehenden Gase kommt. Zudem muss die Anionen leitende Membran den alkalischen Bedingungen Stand halten, die in der AEM-Wasserspaltung herrschen. Diese Eigenschaften werden von speziellen Anionen leitenden Polymeren (auch genannt Anionen leitfähige Ionomere) erfüllt.

Um die Reaktion zu beschleunigen, werden sowohl auf kathodischer als auch auf anodischer Seite katalytisch aktive Substanzen (auch genannt Elektrokatalysatoren) eingebaut. Dies geschieht durch Einbringen von katalytisch aktiven Schichten. Diese können sich auf einem eigens dafür in die Zelle eingebrachten Substratmaterial oder auf einer porösen Transportschicht befinden (engl. catalyst-coated substrate, CCS) oder aber die Membran kann direkt mit katalytisch aktivem Material beschichtet sein (engl. catalyst-coated membrane, CCM).

In der AEM basierten Wasserspaltung muss ein Wasser- bzw. Elektrolytstrom durch die Zelle und ein Gasstrom aus der Zelle realisiert werden, um frisches Wasser zur Spaltung zuzuführen und Wasserstoff bzw. Sauerstoff bzw. das damit angereicherte Wasser bzw. Elektrolyt wieder abzuführen. Dies wird in der Regel durch eine poröse Transportschicht (engl. porous transport layer, PTL) ermöglicht, welche einerseits an der katalytisch aktiven Schicht eng anliegt, um einen guten elektrischen Kontakt zu ermöglichen, andererseits elektrisch leitfähig ist und eine für Gasabtransport sowie Wasser- bzw. Elektrolytzufuhr ausreichende Porosität aufweist. Um den Transport des Wassers bzw. des Elektrolyten durch die Zelle zu verbessern, wird eine spezifische Kanalstruktur (das sogenannte Flussfeld, engl. flow field) in die Zelle eingebaut. Diese Struktur soll einen elektrischen Kontakt zur porösen Transportschicht haben, elektrisch leitfähig sein sowie einen elektrischen Kontakt zu einer bipolaren Platte (engl. bipolar plate, BPP) herstellen. Die bipolaren Platten verbinden zwei benachbarte Zellen elektrisch. Oft wird eine spezifische Kanalstruktur direkt in die bipolare Platte eingearbeitet, z.B. durch mechanische Verformung. Für eine effiziente Wasserspaltung ist es besonders wichtig, dass die Kontaktwiderstände an der Kontaktflächen (i) von katalytisch aktiver Schicht zur porösen Transportschicht, (ii) von poröser Transportschicht zum Flussfeld und (iii) vom Flussfeld zur bipolaren Platte möglichst klein gehalten werden und während des Betriebs von Elektrolyseur durch die Oxidation der Kontaktflächen nicht steigt. Andernfalls werden die erhöhten Kontaktwiederstände zu höheren Zellspannung und geringeren Effizienz sowie zu höherem Energieverbrauch führen.

Einen hervorragenden Überblick über Aufbau und Werkstoffe der gegenwärtig in der AEM basierten Wasserspaltung eingesetzten elektrochemischen Zellen bieten:

Miller, Hamish Andrew et al: Green hydrogen from anion exchange membrane water electrolysis: a review of recent developments in critical materials and operating conditions. Sustainable Energy Fuels, 2020, 4, 2114 DOI: 10.1039/c9se01240k

Allgemeine Ziele der Entwicklung von Elektrolyseuren für die Wasserspaltung bestehen in der Verbesserung der Effizienz des Prozesses und in der Reduktion der Herstellungskosten für den Elektrolyseur.

Im zitierten Review von Miller et alwerden Nickel-Schäume als Elektrodenmaterial erwähnt. Schäume sind poröse Strukturen.

EP 3453785 A1 beschreibt eine elektrochemische Zelle zur basischen Wasserspaltung. Sie offenbart in Abs. [0022] eine Anode mit einer Speiseschicht (feeder layer 17), welche teilweise aus Metallvlies oder Metallschaum besteht. Als Material wird in Abs. [0023] Nickel oder rostfreier Stahl angegeben. Zwischen dem Vlies und der Membran (13) ist noch eine Katalysatorschicht (15) angeordnet; vgl. Figur 1 und Abs. [0015] und [0027]. Durch den Sandwichaufbau Elektrode-Katalysatorschicht-Membran-Katalystorschicht-Elektrode (vgl. Abs. [0053]) baut diese elektrochemische Zelle sehr raumgreifend. Dies ist vor allem dann ein Nachteil, wenn viele solcher Zellen in einem Elektrolyseur verschaltet werden sollen. Dann steigt nicht nur der Bauraum des Elektrolyseurs, sondern auch der Innenwiderstand des Zellstapels. Die Energieeffizienz des Prozesses sinkt dadurch. Gut an der in EP 3453785 A1 gezeigten elektrochemischen Zelle ist das Fluidmanagement: Zur Verbesserung des Wasserzuflusses in die Kompartimente und des Gasabflusses aus den Kompartimenten ist die Membran mit Kanälen versehen; Abs. [0054]. Diese elektrochemische Zelle erscheint daher grundsätzlich für die industrielle Wasserspaltung geeignet zu sein. Nachteil ist der raumgreifende Schichtaufbau und die hohen Herstellungskosten, die durch den Einbau der Katalysatorschichten entstehen: Diese enthalten nämlich wertvolle Metalle, die als Elektrokatalysatoren dienen; vgl. Abs. [0029].

WO 2020260370 A1 beschreibt eine elektrochemische Zelle, bei der ein Kompartiment trocken betrieben werden kann. Auf Seite 5 ist ein CCS auf Nickelvlies oder Schaum erwähnt. Ein CCS weist aber stets eine Katalysatorschicht auf. Als Elektrokatalysator für die Anode werden auf Seite 6 oben Metalloxide wie beispielsweise Kupfer-Kobalt-Oxid empfohlen. Von Pt-Katalysatoren rät die WO 2020260370 A1 auf Seite 6 aus Kostengründen indes ab.

WO 2016142382 A1 offenbart in Figur 2 eine Ausführungsform I einer (photo)elektrochemischen Zelle mit einer Kathode (Korrosionsschutzschicht 15 der Photoelektrode 2), einer anionenleitenden Membran (2) und einer Anode (Gegenelektrode 3). Zwischen Anode (3) und Membran (2) ist eine poröse nickelhaltige Struktur (5A) angeordnet. Die poröse nickelhaltige Struktur (5A) kann aus Nickelfasern oder Fasern aus rostfreiem Stahl bestehen. Auch Nickelschaum ist denkbar (Seite 12). Wie in Figur 2 dargestellt und auf Seite 17 geschildert, ist die Anode (Gegenelektrode 3) von der Membran beabstandet. Dazwischen ist die poröse nickelhaltige Struktur (5A) angeordnet. Nachteil dieser Zelle ist ihr mächtiger Schichtaufbau.

Eine schlankere Lösung ist Ausführungsform II der WO 2016142382 A1, die ohne poröse nickelhaltige Struktur auskommt. Die für die Fluidleitung notwendige Porosität ist in der Membran realisiert. Da die photoelektrochemische Zelle eine integrierte Spannungsquelle aufweist (nämlich die Photoelektrode) ist die für die Wasserspaltung verfügbare elektrische Energie begrenzt. Rein lichtgetrieben ist die Spaltleistung gering. Bei der industriellen Wasserspaltung mit externer elektrischer Energie entstehen große Mengen an gasförmigen Wasserstoff und Sauerstoff, die aus der Zelle ausgeleitet werden müssen. Für diese Gasmenge ist die in der Membran integrierte poröse Struktur der Ausführungsform II nicht ausgelegt. Ausführungsform II baut indes zu groß für einen kompakten Aufbau eines Elektrolyseurs in industriellem Maßstab.

Die zum Zeitpunkt der Anmeldung noch unveröffentlichte EP 4181240 A1 betrifft ebenfalls eine elektrochemische Zelle für den Einsatz in der Wasserelektrolyse, die eine textile Elektrode enthaltend Nickel aufweist. Die textile Elektrode liegt direkt an der Membran an.

In Hinblick auf diesen Stand der Technik liegt der Erfindung die Aufgabe zu Grunde, eine elektrochemische Zelle anzugeben, mit der sich im industriellen Maßstab eine AEM basierte Wasserspaltung durchführen lässt. Die Zelle soll geringe Herstellungskosten verursachen, raumsparend bauen und eine energieeffiziente Produktion von Wasserstoff und Sauerstoff in großen Mengen ermöglichen.

Gelöst wird diese Aufgabe durch eine elektrochemische Zelle nach Anspruch 1.

Gegenstand der Erfindung ist mithin eine für die alkalische Membranwasserelektrolyse bestimmte elektrochemische Zelle umfassend eine Anode, eine Kathode und eine zwischen Anode und Kathode angeordnete, Anionen leitende Membran, bei der die Anode teilweise oder vollständig als ein erster poröser Sinterkörper ausgeführt ist, welcher Körner umfasst, die an ihren Korngrenzen miteinander verschmolzen sind, und dass der erste poröse Sinterkörper unmittelbar an die Membran kontaktiert ist.

Eine wesentliche Erkenntnis der vorliegenden Erfindung ist, dass sich poröse Strukturen in Gestalt von Sinterkörpern nicht nur als Elektrode eignen, sondern zugleich auch die Funktion einer porösen Transportschicht für den Elektrolyten und/oder die gebildeten Gase übernehmen können: Sinterkörper sind grundsätzlich porös, da zwischen den einzelnen Körnern Hohlräume bestehen. Dies liegt daran, dass die Körner unregelmäßig geformt sind und teilweise nur punktuell miteinander verschmolzen sind. In diese Hohlräume können das Wasser bzw. Elektrolyt eindringen und so in Kontakt mit dem Elektrodenmaterial gelangen. Auf diese Weise gelangen die Reaktanten durch die porösen Hohlräume in dem Sinterkörper direkt zu den katalytisch aktiven Zentren. Das entstehende Gas kann durch die Hohlräume ebenfalls entweichen. Auf diese Weise erfüllt der Sinterkörper nicht nur elektrochemische Funktionen, sondern auch fluidtechnische Funktionen. Dank ihrer fluidleitenden Eigenschaften kann die poröse Elektrode direkt mit der Membran kontaktiert werden. Dies bedeutet, dass der Sinterkörper an der Membran unmittelbar flächig anliegt. Zwischen der Anode und der Membran ist demnach keine Katalysatorschicht angeordnet. Es herrscht somit ein direkter mechanischer Kontakt zwischen der Membran und dem Sinterkörper, vorzugsweise über die gesamte Grenzfläche zwischen Membran und Elektrode. Von einem Kontakt im elektrischen Sinne kann indes nicht die Rede sein, weil die Membran nicht elektrisch leitend ist. Dank der fluidleitenden Eigenschaften des Sinterkörpers kann die erfindungsgemäße elektrochemische Zelle ohne zusätzliche poröse Transportschicht auskommen. Dies reduziert den elektrischen Innenwiderstand der Zelle, da es keine Kontaktwiederstände zwischen den typischerweise ejngesetzten einzelnen Komponenten gibt. Gleichwohl kann es erforderlich sein, Flussfelder in die elektrochemische Zelle einzuarbeiten, welche Elektrolyt und Gase in die Zelle hinein und heraus leiten. Die Flussfelder sind aber von der Membran abgewandt platziert; vorzugsweise sind Flussfelder in bipolare Platten oder Endplatten eingearbeitet. Flussfelder haben im Vergleich zu den Poren des Sinterkörpers einen viel größeren Strömungsquerschnitt.

Von bekannten textilen Strukturen unterscheidet sich ein Sinterkörper dadurch, dass er nicht aus textilen Liniengebilden, also Fasern, Garnen, Fäden oder Drähten aufgebaut ist. Ein Sinterkörper ist stattdessen aus Körnern aufgebaut.

Von bekannten Metallschäumen unterscheidet sich ein Sinterkörper dadurch, dass er aus Körnern aufgebaut ist, die an den Korngrenzen zumindest punktuell verbunden sind. Der Sinterkörper ist deswegen nicht monolithisch. Ein Metallschaum weist indes eine monolithische metallische, disperse Phase auf, in der eine Gasphase dispergiert ist. Die Poren der Sinterkörper sind typischerweise viel kleiner als die einzelnen Körner. Im Gegensatz dazu weisen die Metallschäume größere Poren im Vergleich zu ihrer metallischen Phase auf.

In einer besonders bevorzugten Ausführungsform bestehen die Körner des Sinterkörpers aus einem katalytisch aktiven Material oder enthalten dieses zumindest. "Katalytisch aktiv" bedeutet in diesem Zusammenhang, dass das Material eine elektrochemische Reaktion zu beschleunigen vermag, die in der elektrochemischen Zelle durchgeführt wird. Das katalytisch aktive Material ist somit ein Elektrokatalysator.

Die Verwendung von katalytisch aktiven Sintermaterial ermöglicht einen besonders innigen Kontakt der Reaktanten mit den in Körnern des Sintermaterials befindlichen katalytisch aktiven Zentren. Die elektrochemische Reaktion kann somit sehr dicht an der Membran durchgeführt werden, sodass die entstehenden Ionen direkt über die Membran in das gegenüberliegende Kompartiment geleitet werden könne.

Materialien, die elektrokatalytisch aktiv sind, enthalten in der Regel Übergangsmetalle. Übergangselemente im Sinne der Erfindung sind: Sc, Ti, V, Cr, Mn, Fe, Co, Ni, Cu, Zn, Y, Zr, Nb, Mo, Tc, Ru, Rh, Pd, Ag, Cd, La, Hf, Ta, W, Re, Os, Ir, Pt, Au, Hg, Ac, Rf, Db, Sg, Bh, Hs, Mt, Ds, Rg. Sintermaterialien enthaltend ein Übergangselement weisen eine höhere elektrokatalytische Aktivität auf als Sintermaterialien ohne Übergangselement. Außerdem bewirkt vergleichsweise gute elektrische Leitfähigkeit der Übergangsmetalle eine Absenkung des elektrischen Innenwiderstands der elektrochemischen Zelle.

Ganz besonders bevorzugt wird Nickel als elektrokatalytisch aktives Material verwendetet. Entsprechend sieht es eine bevorzugte Ausführungsform der Erfindung vor, dass die Körner des Sinterkörpers Nickel enthalten oder aus Nickel bestehen. Die Körner sind dann selbst elektrokatalytisch aktiv.

Nickel ist ein vergleichsweise preisgünstiges Übergangsmetall mit guten katalytischen Eigenschaften insbesondere in der Wasserelektrolyse. Darüber hinaus existieren einige Nickel-haltige Werkstoffe, die sich gut zu einer Anode sintern lassen. Zu diesen Werkstoffen gehören reines Nickel, Nickel-haltige Legierungen wie insbesondere Hastelloy, Chronin, Monel, Inconel, Incoloy, Invar, Kovar; Stahl enthaltend Nickel, rostfreier Stahl enthaltend Nickel, Stahl der Stahlsorte AISI 301, AISI 301L, AISI 304, AISI 304L, AISI 310, AISI310L, AISI316, AISI 316L, AISI 317, AISI 317L, AISI 321.

Entsprechend sieht es eine besonders bevorzugte Ausführungsform der Erfindung vor, dass die Anode zumindest teilweise als ein erster Sinterkörper ausgeführt ist, dessen Körner aus einem Nickel-haltigen Werkstoff bestehen.

Ein zusätzlicher Vorteil der erfindungsgemäßen elektrochemischen Zelle besteht darin, dass es ein Ionomer (auch oft als engl. Binder bezeichnet) zur Immobilisierung von Elektrokatalysatoren auf dem Substrat bzw. Elektrode (CCS) oder direkt auf der Membran (CCM) nicht zwingend benötigt wird. Während der Elektrolyse gebildeter Sauerstoff ist sehr aktiv und kann das Ionomer chemisch angreifen (oxidieren), was zur Beeinträchtigung der mechanischen Eigenschaften des Ionomers führt und auch die Ablösung des Elektrokatalysators verursachen kann. Dies führt dann zur Steigerung der benötigten Zellspannung und zum erhöhten Energieverbrauch. Wenn der Sinterkörper indes selbst

elektrokatalytisch aktiv ist besteht weniger Gefahr für Katalysatorablösung. Im Ergebnis reduziert die vorgeschlagene Struktur einer elektrochemischen Zelle deren Herstellkosten und ermöglicht aufgrund der geringen elektrischen Widerstände einen energieeffizienten Prozess.

Aufgrund der Vorteile der gesinterten Struktur wird die Anode vorzugsweise vollständig als ein poröser Sinterkörper ausgeführt. Es ist aber auch denkbar eine Anode zu verwenden, die nur teilweise als ein poröser Sinterkörper ausgeführt ist und zu anderen Teilen aus nicht gesintertem Material besteht. Nicht gesintert bedeutet hier ohne erkennbare Korngrenzen. So könnte der Sinterkörper auch auf einer massiven Platte oder auf einem ebenen oder geformten Blech befestigt werden oder aber auch auf einer andersartigen porösen Struktur wie zum Beispiel Metallschaum, Streckmetall oder Streckgitter.

Vorzugsweise ist der erste Sinterkörper frei von einer katalytisch aktiven Beschichtung, die sich von dem Material des Sinterkörpers unterscheidet. Die Katalyse der Anodenreaktion erfolgt dann ausschließlich durch das elektrokatalytisch aktive Material, das in dem Sinterkörper enthalten ist bzw. aus dem die Körner des Sinterkörpers bestehen.

Die Porosität *P* des als Anode genutzten, ersten porösen Sinterkörpers sollte zwischen 5% und 60% oder zwischen 15% und 45% liegen. Die Porosität *P* wird dabei nach der folgenden Formel bestimmt:

$$P = 1-\rho_V/\rho_M.$$

In dieser Formel steht $\rho_V$ für die volumetrische Dichte des porösen Sinterkörpers und $\rho_M$ für die massive Dichte der Körner. $\rho_V$ beschreibt die makroskopische Dichte des gesamten Sinterkörpers, währenddessen $\rho_M$ die mikroskopische Dichte des Sintermaterials beschreibt, aus dem die Körner bestehen.

Verglichen mit Schaum weist ein Sinterkörper eine deutlich niedrigere Porosität auf: Die Porosität von Nickelschäume bewegt sich typischerweise zwischen 80% und 90 %; vgl. Table 1 in

ROCHA FERNANDO et al.: Effect of pore size and electrolyte flow rate on the bubble removal efficiency of 3D pure Ni foam electrodes during alkaline water electrolysis. JOURNAL OF ENVIRONMENTAL CHEMICAL ENGINEERING, Bd. 10, Nr. 3, 1. April 2022 (2022-04-01), Seite 107648 ISSN: 2213-3437, DOI: 10 .1016/3.jece.2022.107648

Einfachstenfalls ist die Porosität innerhalb des ersten Sinterkörpers überall gleich groß. Vorzugsweise kann sich die Porosität innerhalb des ersten Sinterkörpers ändern, und zwar entlang eines (gedachten) Gradienten der senkrecht zu einer Grenzfläche zwischen dem ersten porösem Sinterkörper und Membran angeordnet ist. Die Porosität *P* sollte in Richtung der Membran abnehmen, sodass der erste Sinterkörper an der Grenzfläche zur Membran geringere Porosität hat als an der von der Membran abgewandten Seite der Anode. Auf diese Weise sind die katalytisch aktiven Zentren an der Membran konzentriert, sodass die elektrochemische Reaktion dort besonders intensiv ist. Dadurch werden die Wege der an der Anode erzeugten Ionen verkürzt.

Vorzugsweise sind die Poren des ersten porösen Sinterkörpers kleiner als die Körner des ersten porösen Sinterkörpers. Dies ist ein wesentlicher Unterschied zu Schäumen, wo die Poren größer sind als das feste Material. Die Größenunterschiede lassen sich einfach per Lichtmikroskopie einschätzen, nämlich durch Betrachtung eines Schnitts durch den ersten porösen Sinterkörper. Die Porengröße des Sinterkörpers ist statistisch verteilt. Die Porengröße liegt typischerweise zwischen 1 $\mu$m und 200 $\mu$m. Die Porengröße des Sinterkörpers ist auch viel kleiner als typische Strömungsquerschnitte von Flussfeldern, die im 1 mm-Bereich liegen.

Die Korngröße der Sinterkörper ist ebenfalls statistisch verteilt. Bei der Beurteilung des Größenunterschieds der Poren und der Körner kommt es nicht auf den Vergleich der Extremwerte an, sondern vielmehr auf den Vergleich der Medianwerte: Es ist nicht schädlich, wenn einzelne, extreme große Poren größer sind als extrem kleine Körner, solange der Median der Porengröße kleiner ist als der Median der Korngröße. Die Eigenschaft der Sinterkörper, dass ihre Porengröße kleiner ist als ihre Korngröße, bedeutet statistisch, dass der Median der Porengröße kleiner ist als der Median der Korngröße

Der erste poröse Sinterkörper kann auch aus mindestens zwei Schichten aufgebaut sein, wobei die beiden Schichten eine unterschiedliche Porosität aufweisen bzw. aus Kröner mit unterschiedlicher Partikelgröße bestehen. Die Schicht mit der geringeren Porosität bzw. aus feineren Partikeln ist dann näher an der Membran anzuordnen als die Schicht mit der höheren Porosität bzw. aus den gröberen Partikeln. Dies bewirkt, dass die Porosität der Elektrode zur Membran hin abnimmt, also die Elektrode dichter wird und aus feineren Körnern besteht. Dies ist sinnvoll, weil in der Nähe der Membran eine größere Dichte der katalytisch aktiven Zentren benötigt wird, währenddessen von der Membran entfernt eine größere Durchlässigkeit für Wasser bzw. Elektrolyt und gebildete Gase gefordert ist. Es ist auch möglich, den Sinterkörper aus mehr als zwei Schichten aufzubauen, etwa aus drei oder vier oder fünf oder sechs Schichten. Die Porosität der einzelnen Schichten bzw. die Partikelgröße der Sinterkörner nimmt dann stufenweise von Schicht zu Schicht in Richtung der Membran ab. Auf diese Weise wird der bereits oben erwähnte Gradient realisiert. Die Sinterschichten können über die Korngrenzen miteinander verbunden sein, sodass der Sinterkörper trotz des Schichtsaufbaus als ein Bauteil zu handhaben ist. Dies erleichtert die Assemblierung der Zelle.

Da sich die hier beschriebenen, Nickel enthaltende Sinterkörper auch als Kathode eignen, ist es denkbar, nicht

nur die Anode, sondern auch die Kathode aus einem gesinterten, katalytisch aktiven Material herzustellen. Eine bevorzugte Weiterbildung der elektrochemischen Zelle sieht daher vor, dass ihre Kathode teilweise oder vollständig als ein zweiter poröser Sinterkörper ausgeführt ist, welcher Körner umfasst, die an ihren Korngrenzen miteinander verschmolzen sind.

Um zwischen kathodisch und anodisch genutztem Sinterkörper zu unterscheiden, wird hier der Begriff "erster poröser Sinterkörper" für die Anode verwendet, währenddessen der Begriff "zweiter poröser Sinterkörper" für die Kathode genutzt wird.

Auf der Kathodenseite ist eine Integration der katalytischen Aktivität in das Sintermaterial nicht zwingend erforderlich. Gleichwohl ist es bevorzugt, wenn auch für den zweiten Sinterkörper katalytisch aktives Material verwendet wird. Hier eignet sich dasselbe Material wie auf der Anodenseite. Im einfachsten Fall wird sowohl auf der Anodenseite als auch auf der Kathodenseite dasselbe Material genutzt. Dies muss aber nicht unbedingt so sein. Daher ist eine Unterscheidung zwischen ersten und zweitem Sinterkörper sachdienlich. Vorzugsweise ist die Kathode vollständig als poröser Sinterkörper ausgeführt.

Der zweite poröse Sinterkörper erfüllt neben der elektrochemischen Funktion als Kathode die Funktion einer porösen Transportschicht.

Der strukturelle Aufbau einer elektrochemischen Zelle kann kathodenseitig in zwei Varianten erfolgen:
Gemäß einer ersten Variante ist die Kathode (Wasserstoffseite, insbesondere als zweiter poröser Sinterkörper ausgeführt) unmittelbar an die Membran kontaktiert. Sofern die Membran dann selbst mit keinem katalytisch aktiven Material (Elektrokatalysator) beschichtet ist, setzt dies voraus, dass die katalytisch aktiven Substanzen auf der Kathode aufgebracht sind oder dass das Kathodenmaterial selbst katalytisch aktiv ist.

In einer zweiten Variante ist zwischen Kathode (Wasserstoffseite, insbesondere als zweiter poröser Sinterkörper ausgeführt) und der Membran eine katalytisch aktive Schicht (Elektrokatalysator) angeordnet. Die Körner, aus denen der zweite Sinterkörper aufgebaut ist, müssen dann nicht zwingend katalytisch aktiv sein oder mit katalytisch aktiven Substanzen beschichtet sein. Die Körner des zweiten Sinterkörpers müssen in diesem Fall lediglich elektrisch leitfähig sein, um den elektrischen Kontakt zwischen katalytisch aktiver Schicht (Elektrokatalysator) und Flussfeld bzw. bipolare Platte zu ermöglichen. Dieser Aufbau ist dann vorteilhaft, wenn ein Elektrokatalysator verwendet werden soll, der sich nicht in die Körner integrieren lässt bzw. aus welchem keine Körner hergestellt werden können oder der sich nicht auf den zweiten porösen Sinterkörper langzeitstabil aufbringen lässt oder der eine höhere katalytische Aktivität als das Sintermaterial selbst bzw. als die im Betrieb des Elektrolyseurs auf der Oberfläche der Körner gebildeten katalytisch aktiven Substanzen aufweist.

Wie oben bereits erwähnt, hat die Variante der Erfindung mit der Katalysatorschicht zwischen Kathode und Membran den Vorteil, dass sie Elektrokatalysatoren enthalten kann, die nicht ohne Weiteres auf den zweiten Sinterkörper aufgebracht werden können. So kann die Katalysatorschicht katalytisch aktive Partikel (Elektrokatalysatoren) mit Elementen wie Pt, Ru, Pd, C, Ni, Mn, Mo, Co, Cu, Fe, Cr enthalten.

Besonders vorteilhaft ist, wenn die katalytisch aktiven Partikel des Elektrokatalysators in einem Anionen leitenden Polymer eingebettet sind. Die Katalysatorschicht setzt sich dann zumindest aus den katalytisch aktiven Partikeln und dem Anionen leitenden Polymer zusammen. Ionen leitende Polymere werden Ionomer genannt. Die Einbettung der katalytisch aktiven Partikel in das Ionomer ermöglicht, dass während der Reduktion des Wassers an der Kathode gebildete Hydroxid-Ionen unmittelbar nach der Reaktion in die Membran geleitet werden. Ganz besonders bevorzugt ist, wenn das Anionen leitende Polymer sehr gut an der Oberfläche der Membran haftet und die Hydroxid-Ionen sehr gut leitet. Dann kommt es zu einem besonders effektiven Verbund der Katalysatorpartikel mit der Membran und zu einer besonders guten ionischen Anbindung der Katalysatorpartikel an die Membran.

Im Gegensatz zum bekannten CCM-Design (die Membran ist beidseitig mit Elektrokatalysatoren beschichtet) ist die Membran der erfindungsgemäßen Struktur jedoch allenfalls auf der kathodischen, Wasserstoff produzierenden Seite mit einer Katalysatorschicht versehen. Auf der anodischen, Sauerstoff produzierenden Seite weist sie keine Katalysatorschicht auf; der Elektrokatalysator auf der Sauerstoffseite ist in das gesinterte Anodenmaterial integriert. Folglich kann die Variante mit einer Katalysatorschicht ausschließlich auf der Kathodenseite als "semi-CCM Zelle" aufgefasst werden.

Bei dem trennaktiven Material, aus dem die Anionen leitende Membran aufgebaut ist, handelt es sich auch um ein Anionen leitendes Ionomer. Grundsätzlich können alle Anionen leitfähige Ionomere in die erfindungsgemäße elektrochemische Zelle eingebaut werden und dort die Funktion als trennaktives Membranmaterial und/oder zur Immobilisierung von katalytisch aktiven Partikeln übernehmen.

In einer bevorzugten Ausführungsform der Erfindung enthält die Membran dasselbe Anionen leitende Polymer wie die katalytisch aktive Beschichtung, welche auf der Wasserstoffseite den Katalysator immobilisiert. Zumindest sollte das Ionomer in der Katalysatorschicht und das Ionomer in der Membran dieselbe Wiederholeinheit des Anionen leitenden Polymers aufweisen, die Kettenlänge kann unterschiedlich sein.

Besonders bevorzugt wird ein Anionen leitendes Polymer verwendet, welches der Strukturformel (I) oder (II) oder (III) gehorcht.

Der gemeinsame Vorteil der Ionomere nach Strukturformel (I), (II) oder (III) ist ihre gute ionische Leitfähigkeit, hohe Quellbeständigkeit im alkalischen Milieu und die geringen Synthesekosten.

Die Ionomeren nach der Strukturformel (I) oder (II) oder (III) können sowohl zur Herstellung der Membran als auch als Binder zum Immobilisieren von Elektrokatalysatoren in der katalytisch aktiven Schicht oder auf inaktivem Sintermaterial verwendet werden.

Das anionenleitendes Polymer gemäß Strukturformel (I) ist wie folgt definiert:

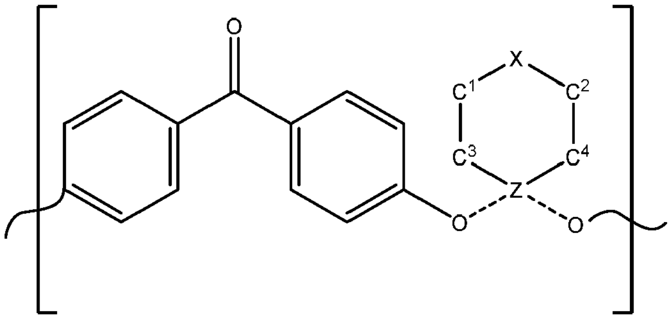

(I)

worin X für ein Strukturelement steht, umfassend ein positiv geladenes Stickstoffatom, welches an $C^1$ und $C^2$ gebunden ist, und das über zwei Bindungen an ein oder zwei Kohlenwasserstoffreste gebunden ist, umfassend 1 bis 12, vorzugsweise 1 bis 6, besonders bevorzugt 1 oder 5 Kohlenstoffatome und worin Z für ein Strukturelement steht, das ein Kohlenstoffatom umfasst, welches an $C^3$ und $C^4$ gebunden ist, und das mindestens einen aromatischen Sechsring umfasst, der direkt an eines der Sauerstoffatome gebunden ist, wobei die aromatischen Sechsringe durch ein oder mehrere Halogen- und/oder ein oder mehrere $C_1$- bis $C_4$-Alkylreste substituiert sein können.

Die Herstellung von Ionomere gemäß Strukturformel (I) ist in der WO 2021/013694 A1 beschrieben.

Das Anionen leitendes Polymer gemäß Strukturformel (II) ist wie folgt definiert:

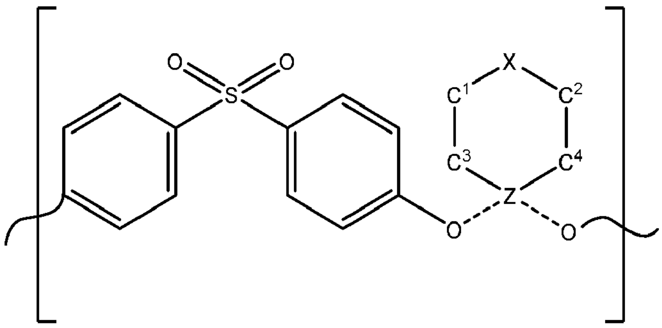

(II)

worin X für ein Strukturelement steht, umfassend ein positiv geladenes Stickstoffatom, das an $C^1$ und $C^2$ gebunden ist und das über zwei Bindungen an ein oder zwei Kohlenwasserstoffreste gebunden ist, umfassend 1 bis 12, vorzugsweise 1 bis 6, besonders bevorzugt 1 oder 5 Kohlenstoffatome,
und worin Z für ein Strukturelement steht, das ein Kohlenstoffatom umfasst, das an $C^3$ und $C^4$ gebunden ist, und das mindestens einen aromatischen Sechsring umfasst, der direkt an eines der Sauerstoffatome gebunden ist, wobei der aromatische Sechsring in den Positionen 3 und 5 mit derselben oder verschiedenen $C_1$- bis $C_4$-Alkylreste substituiert sein kann, insbesondere mit einer Methyl-, iso-Propyl- oder tert-Butyl-Gruppe, wobei die Methylgruppe bevorzugt ist.

Die Herstellung von Ionomere gemäß Strukturformel (II) ist in der EP4032934A1 beschrieben.

Das Anionen leitendes Polymer gemäß Strukturformel (III) ist wie folgt definiert:

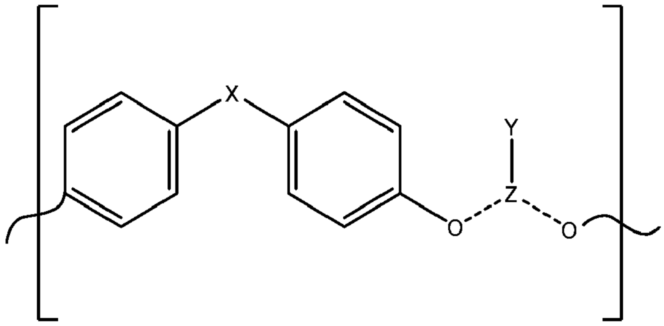

(III)

worin X für eine Keton- oder Sulfon-Gruppe steht;

worin Z für Strukturelement steht, welches mindestens ein tertiäres Kohlenstoffatom und mindestens einen aromatisches Sechsring umfasst, wobei der aromatische Sechsring mit einem der beiden Sauerstoffatome direkt verbunden ist;

worin Y für ein Strukturelement steht, welches mindesten ein Stickstoffatom mit positiver Ladung umfasst, wobei dieses Stickstoffatom mit dem Strukturelement Z verbunden ist.

Die Herstellung von lonomere gemäß Strukturformel (III) ist in der EP4059988A1 beschrieben.

Unabhängig davon, ob die elektrochemische Zelle mit einem oder zwei porösen Sinterkörpern (Elektroden) ausgerüstet ist, ist es vorteilhaft, wenn der erste Sinterkörper und/oder der zweite Sinterkörper mit seiner von der Membran abgewandten Seite an eine bipolare Platte kontaktiert ist. Kontaktiert bedeutet hier nicht nur mechanisch, sondern auch elektrisch, weil eine bipolare Platte elektrisch leitend ist. Vorzugsweise erfolgt die Kontaktierung vollflächig. Besonders bevorzugt ist die direkte Kontaktierung vorgesehen, bei der kein weiteres Material zwischen Elektrode und bipolarer Platte in die Zelle eingegliedert wird. Auf diese Weise wird die Zelle besonders kompakt und kosteneffizient. Die fluidleitenden Funktionen des porösen Sinterkörpers werden dann optimal ausgenutzt. Über die bipolare Platte kann ein elektrischer Kontakt zu einer benachbarten elektrochemischen Zelle aufgebaut werden. So ist eine platzsparende Reihenschaltung mehrerer elektrochemischer Zellen in einem Stapel möglich; siehe unten.

Die bipolare Platte besteht vorzugsweise aus einem der folgenden Werkstoffen: Nickel; Nickel-haltige Legierungen wie Hastelloy, Chronin, Monel, Inconel, Incoloy, Invar, Kovar; Stahl enthaltend Nickel, rostfreier Stahl enthaltend Nickel, Stähle der Sorte AISI 301, AISI 301L, AISI 304, AISI 304L, AISI 310, AISI310L, AISI316, AISI 316L, AISI 317, AISI 317L, AISI 321; vernickelter Stahl, vernickelter rostfreier Stahl, vernickeltes Titan, vernickeltes Messing, vernickeltes Aluminium, vernickeltes Acrylnitril-Butadien-Styrol-Copolymer, Kohlenstoff.

Die hier vorgestellte elektrochemische Zelle ist dafür optimiert, in einer alkalischen Wasserspaltung (AEM-basierte Wasserelektrolyse) eingesetzt zu werden. Gegenstand der Erfindung ist mithin die Herstellung von Wasserstoff und Sauerstoff durch elektrochemische Spaltung von Wasser, mit den folgenden Prozessschritten:

a) Bereitstellen von mindestens einer elektrochemischen Zelle umfassend eine Anode, eine Kathode und eine zwischen Anode und Kathode angeordnete, Anionen leitende Membran, bei der die Anode zumindest teilweise als ein erster poröser Sinterkörper ausgeführt ist, welcher Körner umfasst, die an ihren Korngrenzen miteinander verschmolzen sind, und bei der der erste poröse Sinterkörper unmittelbar an die Membran kontaktiert ist;
b) Bereitstellen von einem wässrigen Elektrolyten mit einem pH-Wert von 7 bis 15;
c) Bereitstellen einer elektrischen Spannungsquelle;
d) Kontaktieren des ersten Sinterkörpers und/oder der Kathode mit dem Elektrolyten;
e) Beaufschlagen von Anode und Kathode mit einer von der elektrischen Spannungsquelle bezogenen elektrischen Spannung;
f) Abführen von Sauerstoff-Gas und/oder von Elektrolyten mit darin gelöstem Sauerstoff aus dem ersten porösen Sinterkörper;
g) Abführen von Wasserstoff-Gas und/oder von Elektrolyten mit darin gelöstem Wasserstoff aus der elektrochemischen Zelle;
h) Optional Abtrennen von Sauerstoff aus dem durch den ersten porösen Sinterkörper abgeführten Elektrolyten;
i) Optional Abtrennen von Wasserstoff aus dem aus der Zelle abgeführten Elektrolyten.

Der hier eingesetzte Elektrolyt enthält das zu spaltende Wasser. Durch Zugabe einer alkalischen Substanz wie beispielsweise NaOH oder KOH zu dem Wasser ist der pH-Wert des Elektrolyten basisch eingestellt (pH = 7 bis pH

= 15). Das Wasser im Elektrolyten wird mithin in der Wasserspaltung abgebaut und deshalb stetig zum Elektrolyten nachgeführt.

Das Verfahren kann in zwei Varianten betrieben werden: nass und halbtrocken. Bei der nassen Variante wird der Elektrolyt in beiden Kompartimenten vorgelegt. In der halbtrockenen Verfahrensweise wird der Elektrolyt nur in einem der beiden Kompartimenten vorgelegt, entweder auf der Anodenseite (Fall 1) oder auf der Kathodenseite (Fall 2).

In der nassen Variante werden beide Kompartimente beiderseits der Membran mit dem wässrigen basischen Elektrolyten getränkt. Der Wasserstoff reichert sich in dem wässrigen Elektrolyten auf der kathodischen Seite an, der Sauerstoff auf der anodischen Seite. Soweit das Gas nicht aus dem Elektrolyten von allein herausblubbert, wird der Elektrolyt aus den beiden Kompartimenten abgezogen und von dem gewünschten Gas befreit.

In der Praxis kann es auch zu Mischformen kommen, bei dem sowohl ein Teil des gebildeten Gases von allein aus dem porösen Sinterkörper austritt und bei dem ein anderer Teil in dem Wasser gelöst bleibt und daraus separat abgetrennt werden muss.

Anders als bei der nassen Verfahrensvariante wird in der halbtrockenen Variante lediglich entweder nur die anodische Seite (Anode, Fall 1) oder nur die kathodische Seite (Kathode, Fall 2) mit einem basischen Elektrolyten getränkt. Das kathodische oder anodische Kompartiment bleibt trocken. Von dort, aus dem zweiten (Kathode) oder ersten (Anode) porösen Sinterkörper, wird das Wasserstoffgas bzw. der mit Wasserstoff angereicherte basische Elektrolyt oder das Sauerstoffgas bzw. der mit Sauerstoff angereicherte basische Elektrolyt abgezogen. Im Fall 1 reichert sich der Sauerstoff wie bei der nassen Variante in dem mit dem basischen Elektrolyten gefüllten anodischen Kompartiment an. Im Fall 2 reichert sich der Wasserstoff wie bei der nassen Variante in dem mit Wasser bzw. mit dem basischen Elektrolyten gefüllten kathodischen Kompartiment an.

Vorteil der beiden halbtrockenen Varianten ist, dass die Trennung vom basischen Elektrolyten und Wasserstoff (Fall 1) oder Sauerstoff (Fall 2) entfällt, da entsprechende Elektroden nicht mit dem basischen Elektrolyten getränkt werden und dadurch das gebildete Gas sehr wenig Wasser enthält. Die Grundidee eines halbtrockenen AEM - Verfahrens mit Wasser nur auf der anodischen Seite (Fall 1) ist in WO 2011/004343 A1 beschrieben.

Bei dem halbtrockenen Verfahren (Fall 1) entfällt also das Tränken des zweiten porösen Sinterkörpers und die Abtrennung des Wasserstoffs. Der gebildete Wasserstoff liegt direkt in gasförmiger Form im kathodischen Kompartiment vor.

In der Praxis kann es bei Fall 1 auch zu Mischformen kommen, bei dem sowohl ein Teil des Sauerstoffs von allein aus dem ersten porösen Sinterkörper austritt und bei dem ein anderer Teil in dem Wasser gelöst bleibt und daraus separat abgetrennt werden muss. Wenn es aber einzig um Wasserstoffgewinnung geht, kann auf die Abtrennung des Sauerstoffs aus dem ersten porösen Sinterkörper abgezogenen Elektrolyten verzichtet werden. Der Sauerstoff verbleibt in dem Elektrolyten. Diese Vorgehensweise ist besonders energieeffizient, weil die Abtrennung des Wasserstoffs und des Sauerstoffs aus dem Elektrolyten entfällt.

Eine separate Abtrennung des Sauerstoffs kann entfallen, wenn die Elektrolyse so gefahren wird, dass nur die kathodische Seite (Kathode, Fall 2) mit dem basischen Elektrolyten getränkt wird. In der Praxis kann es auch bei Fall 2 zu Mischformen kommen, bei dem sowohl ein Teil des Wasserstoffs von allein aus dem ersten porösen Sinterkörper austritt und bei dem ein anderer Teil in dem Elektrolyten gelöst bleibt und daraus separat abgetrennt werden muss.

Allen hier vorgestellten Verfahrensvarianten ist gemein, dass die poröse Struktur der Sinterkörper genutzt wird, um die Reaktanten zu den katalytisch aktiven Zentren des Elektrokatalysators zu leiten. Die porösen Sinterkörper erfüllen erfindungsgemäß stets die Funktion eines Fluidleiters. Je nach Ausführungsform (nass, habtrocken-Fall 1, halbtrocken-Fall 2,) handelt es sich bei dem von dem porösen Sinterkörpern geleiten Fluid um flüssigen Elektrolyten, flüssigen Elektrolyten mit dem gelösten Wasserstoff, flüssigen Elektrolyten mit dem gelösten Sauerstoff, Sauerstoffgas oder Wasserstoffgas. Außerdem kann das Fluid mehre Phasen enthalten aus den genannten Gasen und Flüssigkeiten.

Ein besonderer Vorteil des hier vorgestellten strukturellen Aufbaus der elektrochemischen Zelle ist, dass sich diese für unterschiedliche Verfahrensvarianten einsetzen lässt, ohne strukturell geändert werden zu müssen. Folglich braucht der Hersteller der elektrochemischen Zelle nur eine Bauweise der Zelle zu produzieren und der Anwender der Zelle kann dann entscheiden, welche Verfahrensvariante (nass, halbtrocken...) für seinen Anwendungsfall die wirtschaftlichste ist. Auf diese Weise werden die Kosten für die Produktion der Zelle durch Reduktion der Komplexität stark gesenkt.

Alle hier vorgestellten Verfahrensvarianten werden vorzugsweise kontinuierlich durchgeführt. Dies bedeutet, dass ein wässriger, basischer Elektrolyt kontinuierlich zugeführt und kontinuierlich Gase bzw. mit Sauerstoff und/oder Wasserstoff angereicherter Elektrolyt abgezogen wird. Die kontinuierliche Zuführung des Elektrolyten gleicht den Verlust des darin enthaltenen Wassers durch die Spaltung aus. Andernfalls würde das Wasser mit der Zeit vollständig gespalten und der Elektrolyt verloren gehen. Die elektrochemische Reaktion käme zum Erliegen. Ein Batch-Verfahren, bei dem die elektrochemische Zelle komplett oder zumindest ihr anodisches Kompartiment mit Elektrolyten gefüllt und dieses so lange elektrolysiert wird, bis die Zelle oder das anodische Kompartiment leer ist, ist zwar denkbar, aber im industriellen Maßstab nicht bevorzugt.

Das erfindungsgemäße Verfahren wird vorzugsweise durchgeführt in einem Elektrolyseur, der mindestens zwei erfindungsgemäße elektrochemische Zellen umfasst, die eine gemeinsame bipolare Platte teilen. Dies beutet, dass

eine bipolare Platte zugleich mit der Anode der ersten elektrochemischen Zelle des Elektrolyseurs und mit der Kathode der zweiten elektrochemischen Zelle des Elektrolyseurs in Kontakt steht. Die beiden benachbarten Zellen sind dann in Reihe geschaltet. Ein solcher Elektrolyseur stellt einen weiteren Gegenstand der Erfindung dar.

Der Vorteil eines Elektrolyseurs, bei dem sich benachbarte Zellen jeweils eine bipolare Platte teilen, ist sein kompakter Stapelaufbau und dadurch seine geringe Baugröße. Vorzugsweise umfasst der Elektrolyseur mehr als zwei benachbarte Zellen, die sich eine gemeinsame bipolare Platte teilen. Je nach Größe der einzelnen elektrochemischen Zellen und je nach benötigter Leistung können bis zu 250 Zellen zu einem Elektrolyseur über bipolare Platten gestapelt sein.

Ein weiterer Vorteil des erfindungsgemäßen Elektrolyseurs ist, dass er sich mit einem hohen Automatisierungsgrad fertigen lässt: Die einzelnen Komponenten der elektrochemischen Zellen lassen sich nämlich sehr gut mit einem Roboter stapeln. Auf diese Weise werden die Herstellkosten für den Elektrolyseur gesenkt.

Ein Verfahren zur Herstellung eines Elektrolyseurs, der mindestens zwei erfindungsgemäße elektrochemische Zellen umfasst, die eine gemeinsame bipolare Platte teilen, ist ebenfalls ein Gegenstand der Erfindung, wenn im Rahmen der Herstellung die folgenden Bauteile in dieser Reihenfolge unmittelbar aufeinander gestapelt werden:
Bei diesem Verfahrensablauf wird von Anode nach Kathode gestapelt.

a) ein erster poröser Sinterkörper;
b) eine Anionen leitende Membran;
c) optional eine Katalysatorschicht;
d) eine Kathode;
e) eine bipolare Platte;
f) ein erster poröser Sinterkörper;
g) eine Anionen leitende Membran;
h) optional eine Katalysatorschicht;
i) eine Kathode.

Genauso gut kann von Kathode nach Anode gestapelt werden. Die Stapelreihenfolge ist dann wie folgt:

a) eine Kathode;
b) optional eine Katalysatorschicht;
c) eine Anionen leitende Membran;
d) ein erster poröser Sinterkörper;
e) eine bipolare Platte;
j) eine Kathode;
k) optional eine Katalysatorschicht;
l) eine Anionen leitende Membran;
m) ein erster poröser Sinterkörper.

Beide Stapelreihenfolgen führen zu demselben Elektrolyseur. Um mehr als zwei benachbarte, erfindungsgemäße Zellen erfindungsgemäß über eine gemeinsame bipolare Platte miteinander zu kontaktieren, können die Stapelreihenfolgen mehrfach durchlaufen werden. Nach jedem Durchlauf ist eine bipolare Platte einzulegen.

Beispielsweise ist die Stapelfolge, wenn drei Zellen von Anode in Richtung Kathode gestapelt werden, wie folgt:

a) ein erster poröser Sinterkörper;
b) eine Anionen leitende Membran;
c) optional eine Katalysatorschicht;
d) eine Kathode;
e) eine bipolare Platte;
f) ein erster poröser Sinterkörper;
g) eine Anionen leitende Membran;
h) optional eine Katalysatorschicht;
i) eine Kathode;
j) eine bipolare Platte;
k) ein erster poröser Sinterkörper;
l) eine Anionen leitende Membran;
m) optional eine Katalysatorschicht;
n) eine Kathode.

Alle Stapel können beiderseits am jeweiligen Stapelende mit einer Endplatte versehen werden, die wie die bipolare Platte aufgebaut, aber monopolar verschaltet ist.

Das Stapeln erfolgt vorzugsweise automatisiert, insbesondere mit einem Roboter.

Die Herstellung des Elektrolyseurs ist besonders effektiv, wenn der erste und der zweite Sinterkörper aus demselben Material bestehen. Besonders bevorzugt wird derselbe Sinterkörper sowohl als Anode, als auch als Kathode genutzt. In diesem Fall ist die Bauteilvielfalt kleiner, was die Geschwindigkeit der Montage erhöhen und Kosten des Elektrolyseurs reduzieren. Auch ist dann der Stapelprozess besser mit einem Roboter ausführbar, weil der Roboter nicht zwischen Anode und Kathode unterscheiden braucht, sondern stattdessen nur eine Art Sinterkörper als Elektrode einbauen muss. Es ist dann auch egal, ob von Kathode nach Anode oder umgekehrt gestapelt wird.

Ein Weiterer Gegenstand der Erfindung ist die bestimmungsgemäße Verwendung der elektrochemischen Zelle in der alkalischen Membranwasserelektrolyse.

Die Erfindung soll nun Anhand von Ausführungsbeispielen beschrieben werden. Hierfür zeigen:

| | |
|---|---|
| Figur 1a: | schematische Darstellung der Bauweise einer ersten Ausführungsform einer elektrochemischen Zelle; |
| Figur 1 b: | schematische Darstellung des Betriebs der ersten Ausführungsform einer elektrochemischen Zelle (Fig. 1a) in einer nassen Verfahrensvariante; |
| Figur 1c: | schematische Darstellung des Betriebs der ersten Ausführungsform einer elektrochemischen Zelle (Fig. 1a) in einer halbtrockenen Verfahrensvariante (Fall 1 - "trockene Kathode"); |
| Figur 1d: | schematische Darstellung des Betriebs der ersten Ausführungsform einer elektrochemischen Zelle (Fig. 1a) in einer halbtrockenen Verfahrensvariante (Fall 2 - "trockene Anode"); |
| Figur 2a: | schematische Darstellung der Bauweise einer zweiten Ausführungsform einer elektrochemischen Zelle; |
| Figur 2b: | schematische Darstellung des Betriebs der zweiten Ausführungsform einer elektrochemischen Zelle (Fig. 2a) in einer nassen Verfahrensvariante; |
| Figur 2c: | schematische Darstellung des Betriebs der zweiten Ausführungsform einer elektrochemischen Zelle (Fig. 2a) in einer halbtrockenen Verfahrensvariante (Fall 1 - "trockene Kathode"); |
| Figur 2d: | schematische Darstellung des Betriebs der zweiten Ausführungsform einer elektrochemischen Zelle (Fig. 2a) in einer halbtrockenen Verfahrensvariante (Fall 2 - "trockene Anode"); |
| Figur 3: | schematische Darstellung einer Betriebsvariante eines Elektrolyseurs umfassend zwei elektrochemische Zellen gemäß erster Ausführungsform (Fig. 1a); |
| Figur 4: | schematische Darstellung der Bauweise eines Elektrolyseurs umfassend zwei elektrochemische Zellen gemäß zweiter Ausführungsform (Fig. 2a). |

Figur 1a zeigt schematisch eine erste Ausführungsform einer elektrochemischen Zelle 0 im Querschnitt. Diese umfasst eine Anode 1, eine Kathode 2 und eine zwischen Anode 1 und Kathode 2 angeordnete, Anionen leitende Membran 3. Die Anode 1 und Kathode 2 sind jeweils als ein poröser Sinterkörper ausgeführt. Die Porosität beträgt beispielsweise 38%. Sie kann innerhalb des Sinterkörpers homogen verteilt sein oder einem Gradienten dergestalt folgen, dass die Porosität mit wachsendem Abstand von der Membran 3 zunimmt.

Bei der Membran 3 handelt es ich um eine Flachmembran aus einem Anionen leitenden Polymer. Die Membran 3 trennt die elektrochemische Zelle 0 in zwei Kompartimente, ein anodisches Kompartiment auf der Seite der Anode 1 und ein kathodisches Kompartiment auf der Seite der Kathode 2. Die Anode 1 und Kathode 2 liegen jeweils unmittelbar an der Membran 3 an. An ihrer von der Membran 3 abgewandten Seite kontaktieren Anode 1 und Kathode 2 jeweils eine Endplatte 4.

Die effektive Fläche der Anode 1 und Kathode 2 erstreckt sich senkrecht zu der Zeichenebene.

Die in Figur 1a dargestellte Ausführungsform der elektrochemischen Zelle 0 weist keinen separaten Flussverteiler und keine separate poröse Transportschicht (PTL) oder separate katalytisch aktive Katalysatorschichten auf. Die Funktion von PLT übernehmen die Anode 1 und die Kathode 2 selbst, da sie aus einem porösen Sinterkörper bestehen, der sogleich fluidleitend ist. Der Flussverteiler kann jedoch in die Endplatten 4 eingearbeitet sein (nicht dargestellt). Die Kompartimente der Zelle umfassen somit lediglich den jeweiligen Sinterkörper 1, 2. Das Sintermaterial enthält Nickel und Eisen. Im einfachsten Fall handelt es sich bei dem Material, aus dem die Körner bestehen, um rostfreien Stahl, der in der Regel Nickel und Eisen enthält. Im Betrieb der Zelle wird durch Oxidation von Nickel und Eisen ein Ni-Fe-Mischoxid bzw. Ni-Fe-Mischhydroxid gebildet, welches katalytisch aktiv ist. Folglich bringt das Sintermaterial eine katalytische Aktivität mit; es ist keine zusätzliche Katalysatorschicht notwendig.

Die elektrochemische Zelle 0 erlaubt drei Betriebsweisen: nass, halbtrocken-Fall 1 und halbtrocken-Fall 2.

Figur 1b zeigt schematisiert den Betrieb der elektrochemischen Zelle aus Figur 1a in einer nassen Verfahrensvariante. Dabei werden Anode 1 und Kathode 2 mit Wasser bzw. einem basischen Elektrolyten getränkt und im Elektrolysebetrieb durchströmt.

Figur 1c zeigt eine halbtrockene Verfahrensvariante, bei welcher nur die Anode 1 der elektrochemischen Zelle 0 aus Figur 1a mit Wasser bzw. einem basischen Elektrolyten getränkt und im Elektrolysebetrieb durchströmt wird (halbtrocken-Fall 1). Die Kathode 2 bleibt trocken.

Figur 1d zeigt eine halbtrockene Verfahrensvariante, bei welcher nur die Kathode 2 der elektrochemischen Zelle 0 aus Figur 1a mit Wasser bzw. einem basischen Elektrolyten getränkt und im Elektrolysebetrieb durchströmt wird (halbtrocken-Fall 2). Die Anode 1 bleibt trocken.

Figur 2a zeigt schematisch die Bauweise einer zweiten Ausführungsform einer elektrochemischen Zelle 0 im Querschnitt. Diese umfasst eine Anode 1, eine Kathode 2 und eine zwischen Anode 1 und Kathode 2 angeordnete Anionen leitende Membran 3. Die Anode 1 und Kathode 2 sind jeweils als ein poröser Sinterkörper aus Nickel enthaltenden Körnern ausgeführt. Bei der Membran 3 handelt es ich um eine Flachmembran aus einem Anionen leitenden Ionomer, welche die Zelle 0 in zwei Kompartimente unterteilt. Die beiden Elektroden (Anode 1 und Kathode 2) liegen unmittelbar an der Membran 3 an. An ihrer von der Membran 3 abgewandten Seite kontaktieren Anode 1 und Kathode 2 jeweils eine Endplatte 4.

Die zweite Ausführungsform ist gekennzeichnet durch eine Katalysatorschicht 5, welche zwischen der Kathode 2 und Membran 3 angeordnet ist. Dabei kann die Katalysatorschicht 5 auf der Kathode 2 und/oder auf der kathodischen Seite der Membran 3 aufgetragen sein. Die Katalysatorschicht 5 befindet sich somit in dem kathodischen Kompartiment. Sie enthält katalytisch aktive Partikel (Elektrokatalysator), die mit einem Ionomer auf der Kathode 2 oder auf der Membran 3 fixiert sind. Bei den katalytisch aktiven Partikeln handelt es sich um Au-, Pt-, Rh, Ru-, Pd-, Ag-, Ni-, Co-, Cu-, Fe-, Mn-, Mo-haltige, metallische Partikel oder Legierungen oder Beschichtung oder Verbindungen wie z.B. Sulfide, Selenide, Oxide, Mischoxide, Hydroxide, Mischhydroxide, Spinelle oder Perowskite mit einer Partikelgröße bzw. Dicke der Beschichtung von 1 nm bis 10 μm. Die in der Katalysatorschicht 5 enthaltenen, katalytisch aktive Partikel können freistehend sein oder auf kohlenstoffhaltigen Materialien wie z.B. Ruß oder Kohle oder auf Oxiden wie z.B. $CeO_2$, TiOz oder WOs geträgert sein. Die Konzentration des Elektrokatalysators beträgt zwischen 0.01 mg/cm$^2$ und 25 mg/cm$^2$, bevorzugt zwischen 0.05 mg/cm$^2$ und 5 mg/cm$^2$ bezogen auf der Membran- bzw. Elektrodenfläche (Kathode 2). Die Dicke der partikelhaltigen Katalysatorschicht beträgt zwischen 1 μm und 500μm, bevorzugt zwischen 5 μm und 100 μm. Bei dem Ionomer handelt es sich um dasselbe Material, aus dem die Membran 3 hergestellt wurde. Wenn die Katalysatorschicht 5 auf der Membran 3 aufgebracht ist, handelt es sich bei der dieser um eine "catalyst coated membrane" - CCM. Falls die Katalysatorschicht 5 auf der Kathode 2 aufgebracht ist, handelt es sich bei dieser um ein "catalyst coated substrate" - CCS. Anhand der schematischen Darstellung der Figur 2a allein lässt sich nicht entscheiden, ob es sich um eine CCM- oder CCS-Variante handelt.

Die elektrochemische Zelle 0 aus Figur 2a erlaubt ebenfalls drei Betriebsweisen: nass, halbtrocken-Fall 1 und halbtrocken-Fall 2.

Figur 2b zeigt die nasse Verfahrensvariante, bei der Anode 1 und Kathode 2 mit Wasser bzw. einem basischen Elektrolyten getränkt und im Elektrolysebetrieb durchströmt werden.

Figur 2c zeigt die halbtrockene Verfahrensvariante, bei welcher nur die Anode 1 mit Wasser bzw. einem basischen Elektrolyten getränkt und im Elektrolysebetrieb durchströmt wird (halbtrocken-Fall 1). Die Kathode 2 bleibt trocken.

Figur 2d zeigt die halbtrockene Verfahrensvariante, bei welcher nur die Kathode 2 mit Wasser bzw. einem basischen Elektrolyten getränkt und im Elektrolysebetrieb durchströmt wird (halbtrocken-Fall 2). Die Anode 1 bleibt trocken.

Figur 3 zeigt schematisch eine erste Ausführungsform eines Elektrolyseurs 6 im Nassbetrieb. Der Elektrolyseur 6 umfasst zwei identisch aufgebaute, benachbarte elektrochemische Zellen 0 nach der ersten Ausführungsform, die über eine gemeinsame bipolare Platte 7 kontaktiert sind.

Zur Durchführung einer Wasserspaltung mit dem ersten Elektrolyseur 6 werden alle Elektroden mit Wasser bzw. mit einem basischen Elektrolyten getränkt und im Elektrolysebetrieb kontinuierlich durchströmt. Diese Betriebsweise entspricht der oben als "nass" beschriebenen Verfahrensvariante, weil alle poröse Sinterkörper mit Wasser bzw. mit einem basischen Elektrolyten getränkt und durchströmt werden. Sodann wird an jeder Zelle eine zwischen Anode 1 und Kathode 2 wirkende elektrische Spannung angelegt. Diese bewirkt nach dem oben beschriebenen Prinzip eine Wasserspaltung und damit verbundene Freisetzung von Wasserstoff $H_2$ in den porösen Sinterkörpern, welche die Kathode 2 bilden bzw. von Sauerstoff $O_2$ in den porösen Sinterkörpern, welche die Anode 1 bilden. Sauerstoff $O_2$, Wasserstoff $H_2$ und nicht gespaltenes Wasser $H_2O$ bzw. basischer Elektrolyt werden entsprechend aus der Anode 1 und Kathode 2 abgezogen, sowie Wasser bzw. basischer Elektrolyt werden kontinuierlich durch Anode 1 und Kathode 2 durchgepumpt.

Figur 4 zeigt schematisch eine zweite Ausführungsform eines Elektrolyseurs 8 im Betrieb. Der zweite Elektrolyseur 8 umfasst zwei identisch aufgebaute, benachbarte elektrochemische Zellen 0 nach der zweiten Ausführungsform, die über eine gemeinsame bipolare Platte 7 kontaktiert sind.

Zur Durchführung einer Wasserspaltung mit dem zweiten Elektrolyseur 8 werden alle Elektroden mit Wasser

bzw. mit einem basischen Elektrolyten getränkt und im Elektrolysebetrieb durchströmt. Diese Betriebsweise entspricht der oben als "nass" beschriebenen Verfahrensvariante, weil beide Sinterkörper mit Wasser bzw. mit einem basischen Elektrolyten getränkt werden. Sodann wird an jeder Zelle eine zwischen Anode 1 und Kathode 2 wirkende elektrische Spannung angelegt. Diese bewirkt nach dem oben beschriebenen Prinzip eine Wasserspaltung und damit verbundene Freisetzung von Wasserstoff $H_2$ in den porösen Sinterkörpern, welche die Kathode 2 bilden bzw. von Sauerstoff $O_2$ in den porösen Sinterkörpern, welche die Anode 1 bilden. Sauerstoff $O_2$, Wasserstoff $H_2$ und nicht gespaltenes Wasser $H_2O$ bzw. basischer Elektrolyt werden entsprechend aus der Anode 1 und Kathode 2 abzogen, sowie Wasser bzw. basischer Elektrolyt werden kontinuierlich durch Anode 1 und Kathode 2 durchgepumpt.

## Versuche

Die mit der Erfindung erzielten Effekte sollen nun anhand von experimentellen Daten belegt werden. Dafür wird ein poröser Sinterkörper als Anodenmaterial in einer Elektrolysetestzelle zur AEM-basierten Wasserspaltung eingesetzt. Als Vergleich wurde ein Nickelschaum als Anodenmaterial verwendet.

### 1. Herstellung eines Ionomers (nicht Teil der Erfindung)

Ein Anionen leitendes Polymer wurde entsprechend Beispiel 3 der EP3770201A1 synthetisiert.

### 2. Herstellung einer Anionen leitenden Membran (nicht Teil der Erfindung)

Sodann wurde aus dem in 1. synthetisierten Anionen leitenden Polymer eine Membran hergestellt, wie in Beispiel 4 der EP3770201A1 beschrieben. Für jeden Versuch wurde ein frisches Stück Membran verwendet, welches zuvor in 1 M KOH über 24 Stunden bei 60°C ionengetauscht wurde.

### 3. Herstellung einer aktiven Testkathode (nicht Teil der Erfindung)

Eine Tinte aus auf Kohlenstoff-geträgerten Platin (60 wt.% Pt auf Kohlesupport, Artikel-Nr. AB204745, aber GmbH, DE) wurde hergestellt. Hierfür wurden je Gewichtanteil platinbasierten Katalysator zunächst 44 Teile Wasser, anschließend 44 Teile Ethanol und schließlich 5 Teile Ionomerlösung (5% in 1. hergestelltes Ionomer in DMSO) hinzugesetzt und die Tinte aufgeschüttelt und mittels Ultraschalls für 30 Minuten dispergiert.

Zur Herstellung einer Kathode wurde Kohlefaservlies (TGP-H120, Dicke = 370 μm, Porosität = 78 %, Probenbezeichnung "Kohlefaservlies", Toray Industries Inc., JP) als Substrat ausgewählt. Das Substrat wurde mit der Pt/C enthaltenden Tinte, deren Herstellung oben beschrieben wurde, mit einem Ultraschallsprühbeschichter PRISM 400 (Fa. Ultrasonic Systems, Inc, Haverhill, MA, US) beschichtet. Die Platinbeladung Pt betrugt 0.6 $mg/cm^2$.

### 4. Elektrolysemessung in Testzelle

Ein Schema der Elektrolysetestzelle ist in Figur 2a gezeigt. Alle Ausführungsbeispiele wurden in einer elektrochemischen Zelle 0 bestehend aus Anode 1, Kathode 2, Membrane 3 und zwei Endplatten 4 mit 16 $cm^2$ aktiver Fläche durchgeführt. Bestandteil der Kathode 3 ist die oben beschriebene Katalysatorbeschichtung 5. Bei der Kathode 3 handelt es sich somit um ein catalyst coated substrate (CCS).

Die Endplatten 4 verfügen über Flussfelder in Form von 1.5 mm breiten länglichen Kanälen mit einem Zulauf und einem Abfluss je Kanal (das ist in Figur 2a nicht dargestellt).

Als Elektrolyt wurde 1 M KOH benutzt, welches mit 50 mL/min durch die Anode 1 und durch die Kathode 2 durchgepumpt wurde. Alle Versuche wurden bei 60°C durchgeführt, wobei nur der Elektrolyt temperiert wurde. Einzelne Besonderheiten der jeweiligen Ausführungsbeispiele werden separat angegeben.

Beispiel 1 (erfinderisch)

Hier wird ein poröser Sinterkörper (Stahl SAE 316L, Dicke = 1,57 mm, Porosität = 38%, Probenbezeichnung "Sinterkörper") als Anode, ohne weitere Katalysatorbeschichtung verwendet. Dieser Sinterkörper fungiert gleichzeitig als poröse Transportschicht wie auch als aktives (Anoden-) Katalysatormaterial. In Figur 5 wird die Strom-Spannungs-Kennlinie, welche mit der beschriebenen Elektrolysetestzelle aufgezeichnet, wurde dargestellt.

**Figur 5:** Strom-Spannungs-Kennlinie in Beispiel 1

Es ist zu erkennen, dass durch die Verwendung des Sinterkörpers ohne zusätzlicher, anodenseitiger Katalysatorbeschichtung Stromdichten von bis zu 1.5 A/$cm^2$ bei unter 1.9 V erzielt werden können. Dies impliziert einen hohen Wirkungsgrad bei der technischen Anwendung.

Beispiel 2. (nicht erfinderisch)

Hierbei wurde Schaum aus Nickel (Produkt-Code: NI00-FA-000152, Dicke = 1.6 mm, Porosität = 95 %, Goodfellow, UK, Probenbezeichnung "Schaum") als Anode ohne weitere Katalysatorbeschichtung verwendet. Dieser Sinterkörper fungiert gleichzeitig als poröse Transportschicht wie auch als aktives (Anoden-)Katalysatormaterial. In Figur 6 wird die Strom-Spannungskennlinie, welche mit der Nickelschaum-Anode aufgezeichnet wurde, als punktierte Linie dargestellt. Die durchgezogene Linie ist die Strom-Spannungs-Kennlinie aus Figur 5, die mit der gesinterten Stahl-Anode aufgezeichnet wurde.

**Figur 6:** Strom-Spannungs-Kennlinie in Beispiel 2 und Beispiel 1

Es ist zu erkennen, dass bei Verwendung des Nickelschaums (punktierte Linie) signifikant höhere Spannungen erreicht werden als bei Verwendung des Sinterkörpers (durchgezogene Linie). Die Stromdichte von 1.5 A/$cm^2$ wird hierbei beispielsweise erst bei 2.15 V erreicht. Diese relativ hohe Spannung bedeutet einen sehr geringen Wirkungsgrad in der Anwendung. Technisch würde das bedeuten, dass mehr Energie (>10%) für die Produktion der gleichen Menge Wasserstoff aufgewendet werden müsste.

Fazit

Aus dem Vergleich der beiden Beispiele wird klar, dass die Verwendung von Sinterkörpern als Anodenmaterial für die AEM-Wasserelektrolyse eine wesentliche Verbesserung der Effizienz gegenüber geschäumten Elektroden darstellt.

**Bezugszeichenliste**

| | |
|---|---|
| 0 | Elektrochemische Zelle |
| 1 | erster poröser Sinterkörper (Anode) |
| 2 | zweiter poröser Sinterkörper (Kathode) |
| 3 | Anionen leitende Membran |
| 4 | Endplatte |
| 5 | Katalysatorschicht |
| 6 | Elektrolyseur enthaltend zwei benachbarte elektrochemische Zellen 0, die über eine gemeinsame bipolare Platte 7 kontaktiert sind, nach der ersten Ausführungsform |
| 7 | bipolare Platte |
| 8 | Elektrolyseur enthaltend zwei benachbarte elektrochemische Zellen 0, die über eine gemeinsame bipolare Platte 7 kontaktiert sind, nach der zweiten Ausführungsform |
| $H_2O$ | Wasser bzw. ein basischer Elektrolyt |
| $H_2$ | Wasserstoff |
| $O_2$ | Sauerstoff |

**Patentansprüche**

1. Elektrochemische Zelle (0), bestimmt für die alkalische Membranwasserelektrolyse, umfassend eine Anode (1), eine Kathode (2) und eine zwischen Anode (1) und Kathode (2) angeordnete, Anionen leitende Membran (3), **dadurch gekennzeichnet,**
**dass** die Anode (1) teilweise oder vollständig als ein erster poröser Sinterkörper (1) ausgeführt ist, welcher Körner umfasst, die an ihren Korngrenzen miteinander verschmolzen sind, und dass der erste poröse Sinterkörper (1) unmittelbar an die Membran (3) kontaktiert ist.

2. Elektrochemische Zelle (0) nach Anspruch 1, **dadurch gekennzeichnet, dass** die Körner des ersten porösen Sinterkörpers (1) ein katalytisch aktives Material enthalten oder daraus bestehen, wobei das katalytisch aktive Material mindestens ein Übergangsmetall enthält, welches ausgewählt ist aus der Liste bestehend aus den folgenden

Übergangsmetallen: Sc, Ti, V, Cr, Mn, Fe, Co, Ni, Cu, Zn, Y, Zr, Nb, Mo, Tc, Ru, Rh, Pd, Ag, Cd, La, Hf, Ta, W, Re, Os, Ir, Pt, Au, Hg, Ac, Rf, Db, Sg, Bh, Hs, Mt, Ds, Rg.

3. Elektrochemische Zelle (0) nach Anspruch 1 oder 2, **dadurch gekennzeichnet, dass** die Körner des ersten porösen Sinterkörpers (1) Nickel enthalten.

4. Elektrochemische Zelle (0) nach Anspruch 3, **dadurch gekennzeichnet**, die Körner des ersten porösen Sinterkörpers (1) aus einem Werkstoff bestehen, der ausgewählt ist aus der Gruppe bestehend aus den folgenden Werkstoffen: Nickel, Nickel-haltige Legierungen, Hastelloy, Chronin, Monel, Inconel, Incoloy, Invar, Kovar; Stahl enthaltend Nickel, rostfreier Stahl enthaltend Nickel, Stahl der Stahlsorte AISI 301, AISI 301L, AISI 304, AISI 304L, AISI 310, AISI310L, AISI316, AISI 316L, AISI 317, AISI 317L, AISI 321.

5. Elektrochemische Zelle (0) nach einem der Ansprüche 1 bis 4, **dadurch gekennzeichnet, dass** zwischen dem ersten porösen Sinterkörper (1) und der Membran (3) keine Katalysatorschicht angeordnet ist.

6. Elektrochemische Zelle (0) nach einem der Ansprüche 1 bis 5, **dadurch gekennzeichnet, dass** die Porosität *P* des ersten porösen Sinterkörpers (1) zwischen 5% und 60% oder zwischen 15% und 45% liegt, wobei sich die Porosität *P* nach der folgenden Formel bestimmt:

$$P = 1 - \rho_V / \rho_M$$

worin $\rho_V$ für die volumetrische Dichte des ersten porösen Sinterkörpers (1) steht und worin $\rho_M$ für die massive Dichte der Körner des ersten porösen Sinterkörpers (1) steht.

7. Elektrochemische Zelle (0) nach Anspruch 6, **dadurch gekennzeichnet, dass** sich die Porosität *P* entlang eines Gradienten ändert, wobei der Gradient senkrecht zu einer Grenzfläche zwischen dem ersten porösem Sinterkörper (1) und Membran (3) angeordnet ist und wobei die Porosität *P* in Richtung der Membran (3) abnimmt.

8. Elektrochemische Zelle (0) nach Anspruch 1 bis 7, **dadurch gekennzeichnet, dass** die Poren des ersten porösen Sinterkörpers (1) kleiner sind als die Körner des ersten porösen Sinterkörpers (1), beurteilt im Schnittbild mit Lichtmikroskopie.

9. Elektrochemische Zelle (0) nach Anspruch 1 bis 8, **dadurch gekennzeichnet, dass** die Kathode (2) teilweise oder vollständig als ein zweiter poröser Sinterkörper (2) ausgeführt ist, welcher Körner umfasst, die an ihren Korngrenzen miteinander verschmolzen sind.

10. Elektrochemische Zelle (0) nach Anspruch 9, **dadurch gekennzeichnet, dass** die Körner des zweiten porösen Sinterkörpers (2) ein katalytisch aktives Material enthalten oder daraus bestehen, wobei das katalytisch aktive Material mindestens ein Übergangsmetall enthält, welches ausgewählt ist aus der Liste bestehend aus den folgenden Übergangsmetallen: Sc, Ti, V, Cr, Mn, Fe, Co, Ni, Cu, Zn, Y, Zr, Nb, Mo, Tc, Ru, Rh, Pd, Ag, Cd, La, Hf, Ta, W, Re, Os, Ir, Pt, Au, Hg, Ac, Rf, Db, Sg, Bh, Hs, Mt, Ds, Rg.

11. Elektrochemische Zelle (0) nach Anspruch 9 oder 10, **dadurch gekennzeichnet, dass** die Körner des zweiten porösen Sinterkörpers (2) Nickel enthalten.

12. Elektrochemische Zelle (0) nach Anspruch 11, **dadurch gekennzeichnet, dass** die Körner des zweiten porösen Sinterkörpers (2) aus einem Werkstoff bestehen, der ausgewählt ist aus der Gruppe bestehend aus den folgenden Werkstoffen: Nickel, Nickel-haltige Legierungen, Hastelloy, Chronin, Monel, Inconel, Incoloy, Invar, Kovar; Stahl enthaltend Nickel, rostfreier Stahl enthaltend Nickel, Stahl der Stahlsorte AISI 301, AISI 301L, AISI 304, AISI 304L, AISI 310, AISI310L, AISI316, AISI 316L, AISI 317, AISI 317L, AISI 321.

13. Elektrochemische Zelle (0) nach einem der Ansprüche 1 bis 12, **dadurch gekennzeichnet, dass** zwischen der Kathode (2) und der Membran (3) eine Katalysatorschicht (5) angeordnet ist.

14. Elektrochemische Zelle (0) nach Anspruch 13, **dadurch gekennzeichnet, dass** die Katalysatorschicht (5) mindestens ein Element oder eine Verbindung eines Elements enthält, welches aus der Gruppe bestehend aus den folgenden Elementen ausgewählt ist: Pt, Ru, Pd, C, Ni, Mo, Co, Cu, Fe, Cr.

**15.** Elektrochemische Zelle (0) nach Anspruch 13 oder 14, **dadurch gekennzeichnet, dass** die Katalysatorschicht (5) ein Anionen leitendes Polymer enthält.

**16.** Elektrochemische Zelle (0) nach Anspruch 15, **dadurch gekennzeichnet, dass** das Anionen leitende Polymer eine Wiederholeinheit enthält, welche ebenfalls in der Membran (3) enthalten ist.

**17.** Elektrochemische Zelle (0) nach einem der vorhergehenden Ansprüche 1 bis 16, **dadurch gekennzeichnet, dass** der erste poröse Sinterkörper (1) und/oder der zweite poröse Sinterkörper (2) mit ihrer von der Membran (3) abgewandten Seite an eine bipolare Platte (7) kontaktiert ist.

**18.** Elektrochemische Zelle (0) nach Anspruch 17, **dadurch gekennzeichnet, dass** die bipolare Platte (7) aus einem Werkstoff besteht, welcher ausgewählt ist aus der Gruppe bestehend aus den folgenden Werkstoffen: Nickel; Nickelhaltige Legierungen, Hastelloy, Chronin, Monel, Inconel, Incoloy, Invar, Kovar; Stahl enthaltend Nickel, rostfreier Stahl enthaltend Nickel, Stahl der Stahlsorte AISI 301, AISI 301L, AISI 304, AISI 304L, AISI 310, AISI310L, AISI316, AISI 316L, AISI 317, AISI 317L, AISI 321; vernickelter Stahl, vernickelter rostfreier Stahl, vernickeltes Titan, vernickeltes Messing, vernickeltes Aluminium, vernickeltes Acrylnitril-Butadien-Styrol-Copolymer, Kohlenstoff.

**19.** Verfahren zur Herstellung von Wasserstoff ($H_2$) und Sauerstoff ($O_2$) durch elektrochemische Spaltung von Wasser ($H_2O$), mit den folgenden Schritten:

a) Bereitstellen von mindestens einer elektrochemischen Zelle (0) nach einem der Ansprüche 1 bis 18;
b) Bereitstellen von einem wässrigen Elektrolyten mit einem pH-Wert von 7 bis 15;
c) Bereitstellen einer elektrischen Spannungsquelle;
d) Kontaktieren des ersten Sinterkörpers (1) und/oder der Kathode (2) mit dem Elektrolyten;
e) Beaufschlagen von Anode (1) und Kathode (2) mit einer von der elektrischen Spannungsquelle bezogenen elektrischen Spannung;
f) Abführen von Sauerstoff-Gas ($O_2$) und/oder von Elektrolyten mit darin gelöstem Sauerstoff ($O_2$) aus dem ersten porösen Sinterkörper (1);
g) Abführen von Wasserstoff-Gas ($H_2$) und/oder von Elektrolyten mit darin gelöstem Wasserstoff ($H_2$) aus der elektrochemischen Zelle (0);
h) Optional Abtrennen von Sauerstoff ($O_2$) aus dem durch den ersten porösen Sinterkörper (1) abgeführten Elektrolyten;
i) Optional Abtrennen von Wasserstoff ($H_2$) aus dem aus der Zelle (0) abgeführten Elektrolyten.

**20.** Elektrolyseur (6, 8) zur Durchführung eines Verfahrens nach Anspruch 19, umfassend zumindest zwei elektrochemische Zellen (0) nach Anspruch 17, die eine gemeinsame bipolare Platte (7) teilen.

**21.** Verfahren zur Herstellung eines Elektrolyseurs (6, 8) nach Anspruch 20, im Rahmen dessen die folgenden Bauteile in dieser Reihenfolge unmittelbar aufeinander gestapelt werden:

a) ein erster poröser Sinterkörper (1);
b) eine Anionen leitende Membran (3);
c) optional eine Katalysatorschicht (5);
d) eine Kathode (2);
e) eine bipolare Platte (7);
f) ein erster poröser Sinterkörper (1);
g) eine Anionen leitende Membran (3);
h) optional eine Katalysatorschicht (5);
i) eine Kathode (2).

**22.** Verfahren zur Herstellung eines Elektrolyseurs (6,8) nach Anspruch 20, im Rahmen dessen die folgenden Bauteile in dieser Reihenfolge unmittelbar aufeinander gestapelt werden:

a) eine Kathode (2);
b) optional eine Katalysatorschicht (5);
c) eine Anionen leitende Membran (3);
d) ein erstes poröser Sinterkörper (1);
e) eine bipolare Platte (7);

f) eine Kathode (2);
g) optional eine Katalysatorschicht (5);
h) eine Anionen leitende Membran (3);
i) ein erster poröser Sinterkörper (1).

**23.** Verwendung einer Elektrochemische Zelle (0) nach einem der Ansprüche 1 bis 16 in der alkalischen Membranwasserelektrolyse.

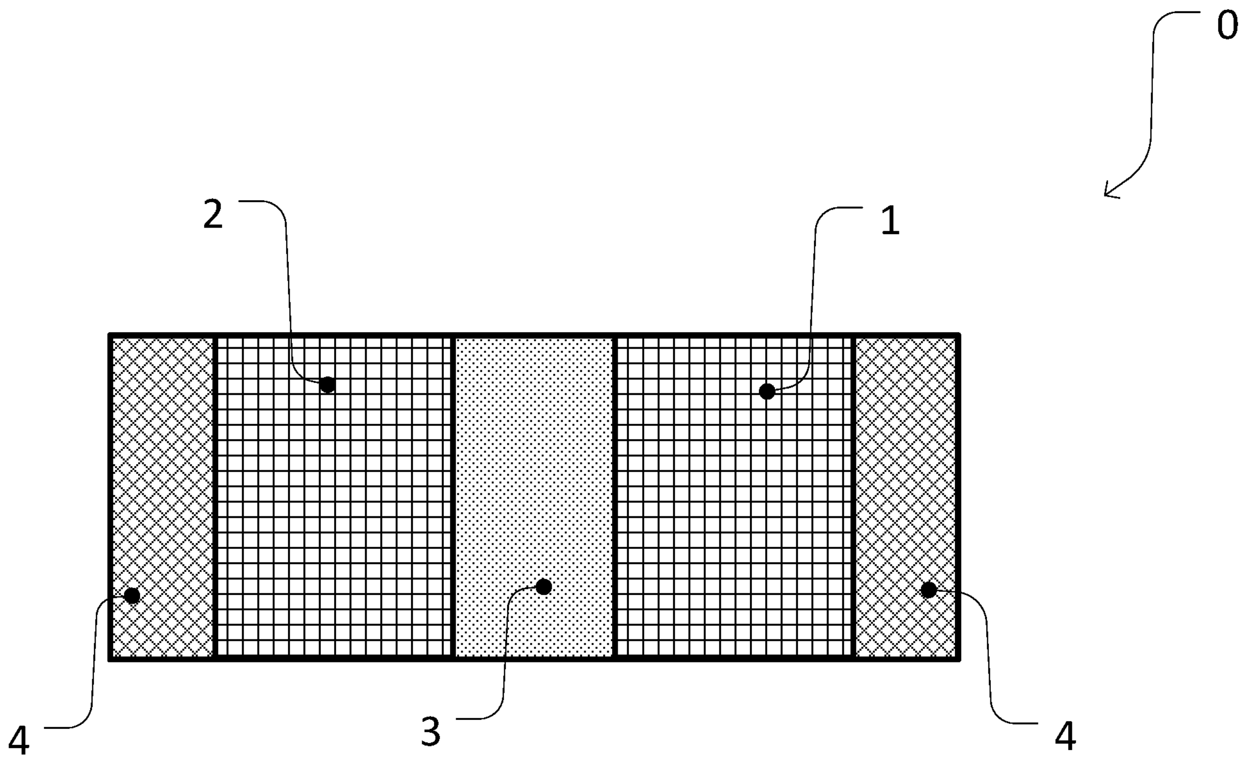


Fig. 1a

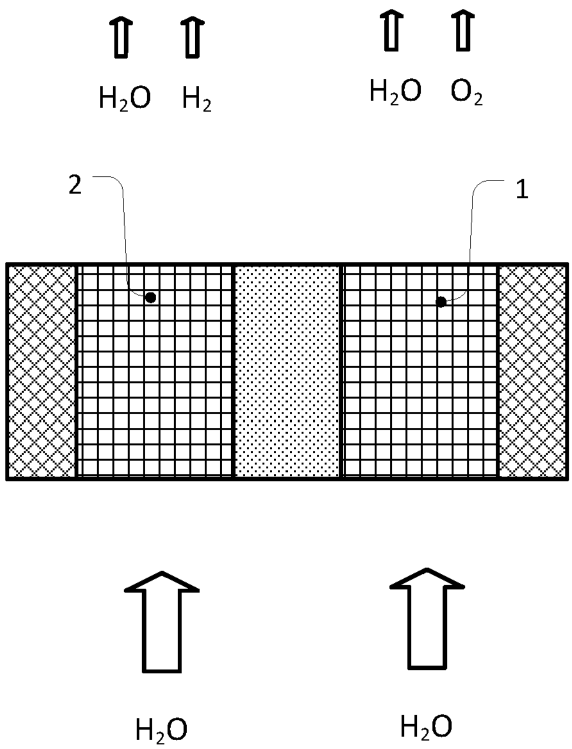


Fig. 1b

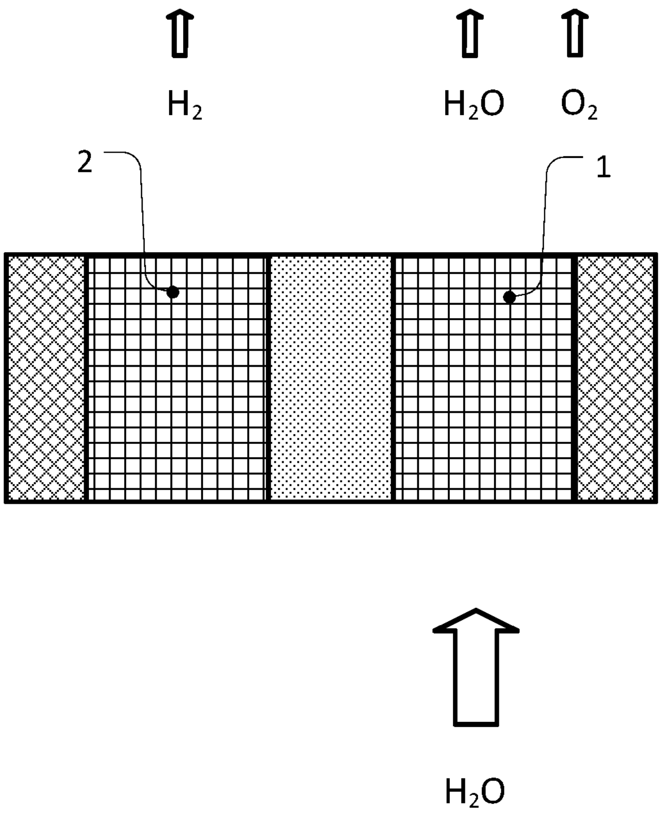


Fig. 1c

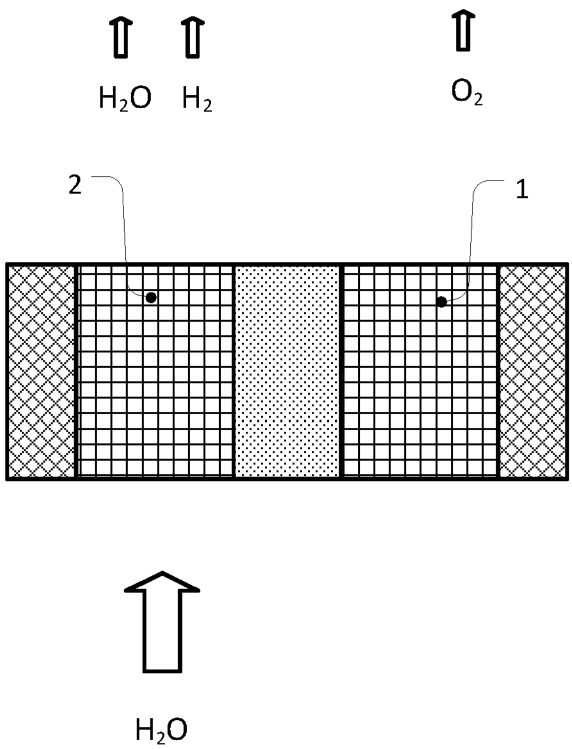


Fig. 1d

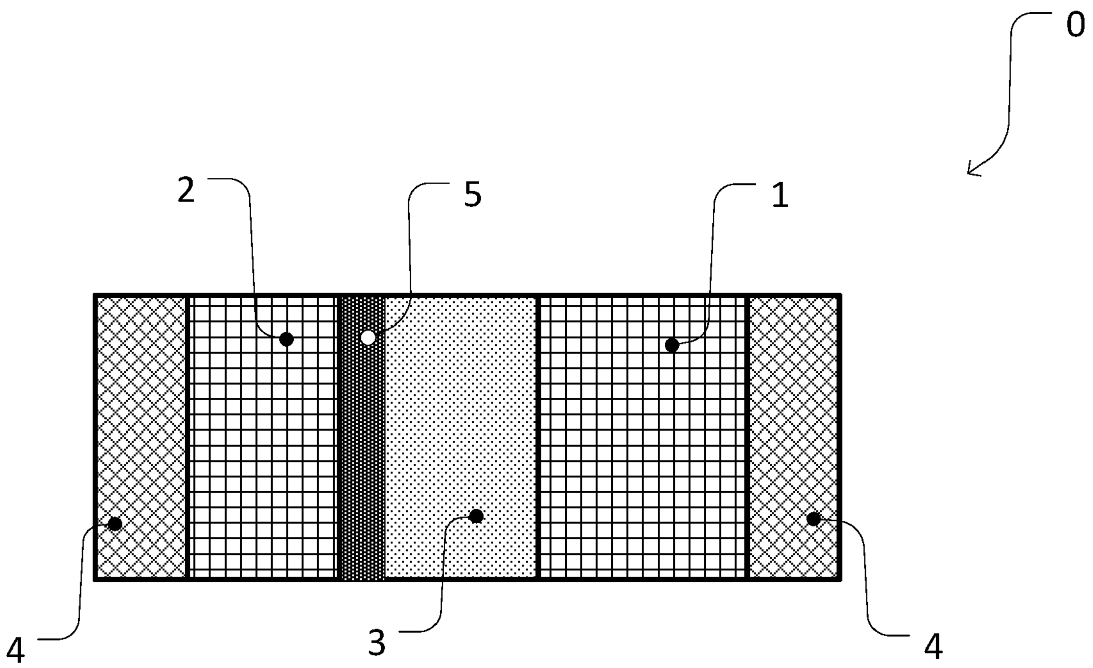


Fig. 2a

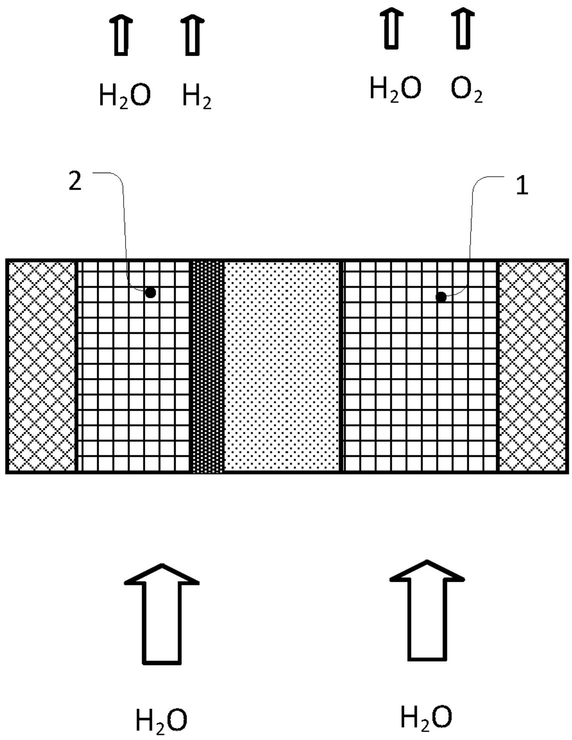


Fig. 2b

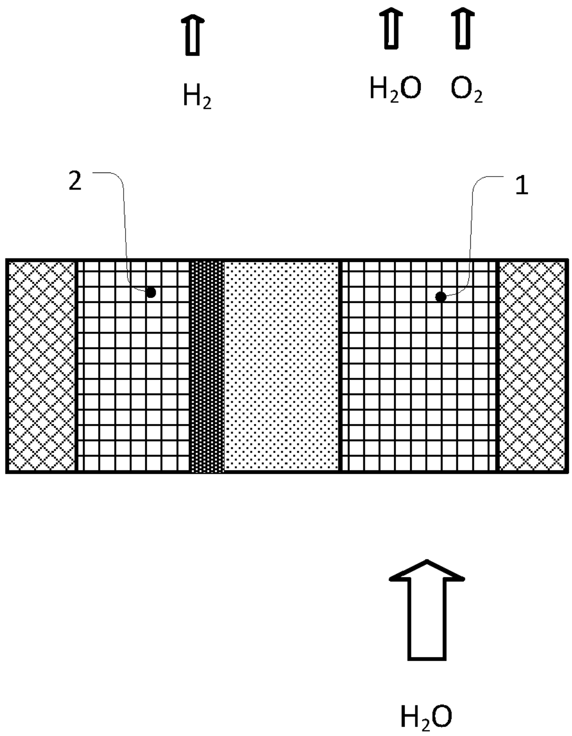


Fig. 2c

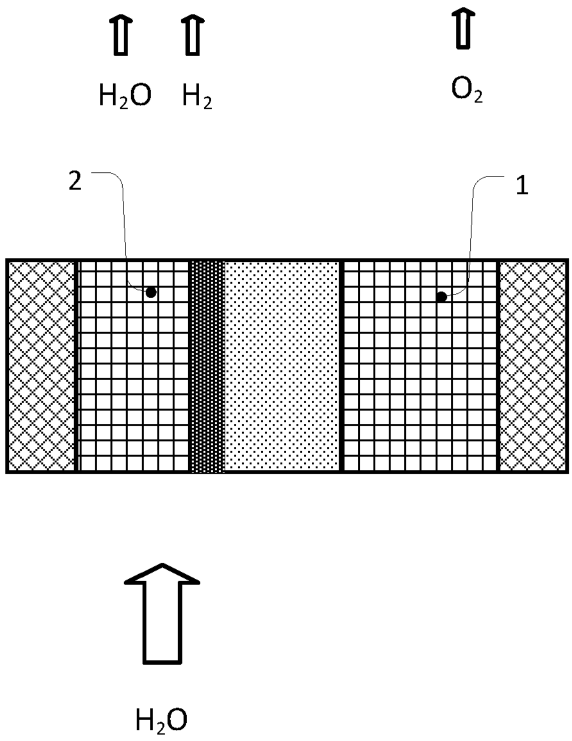


Fig. 2d

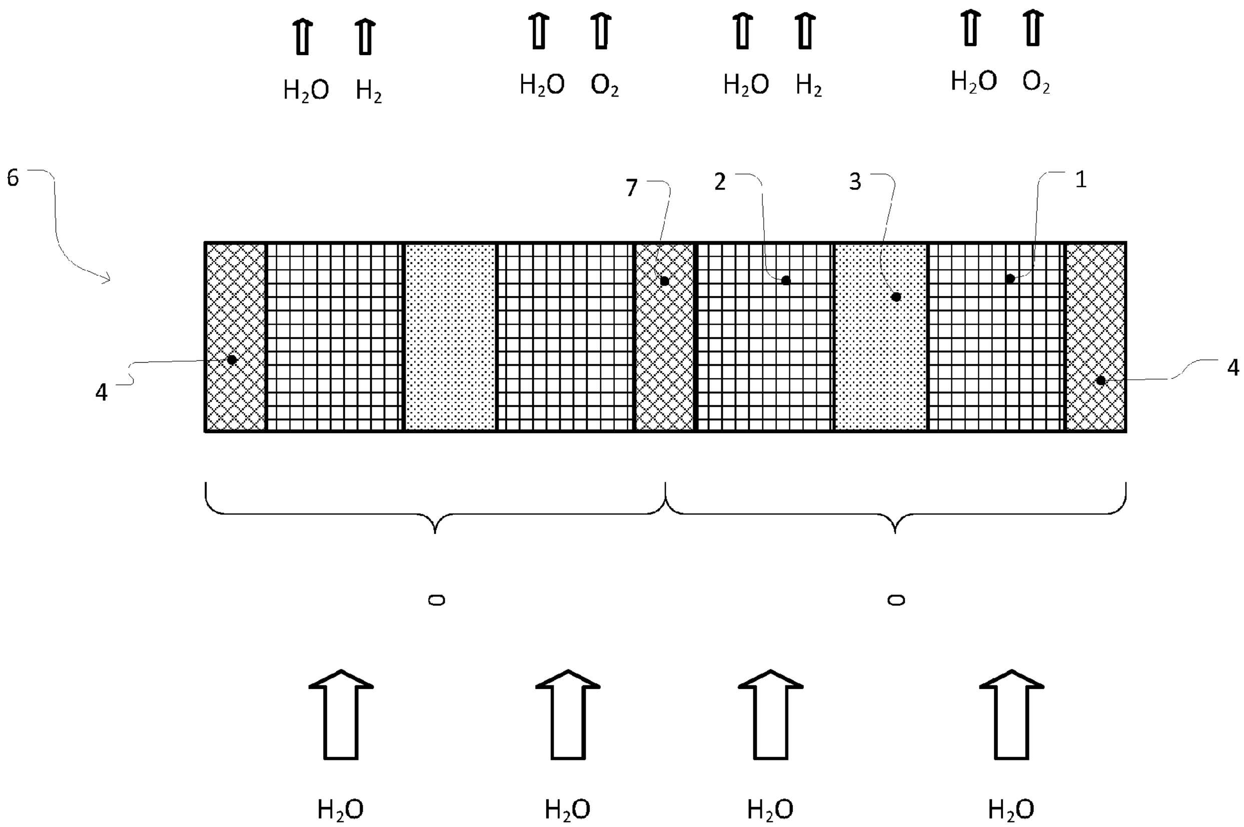


Fig. 3

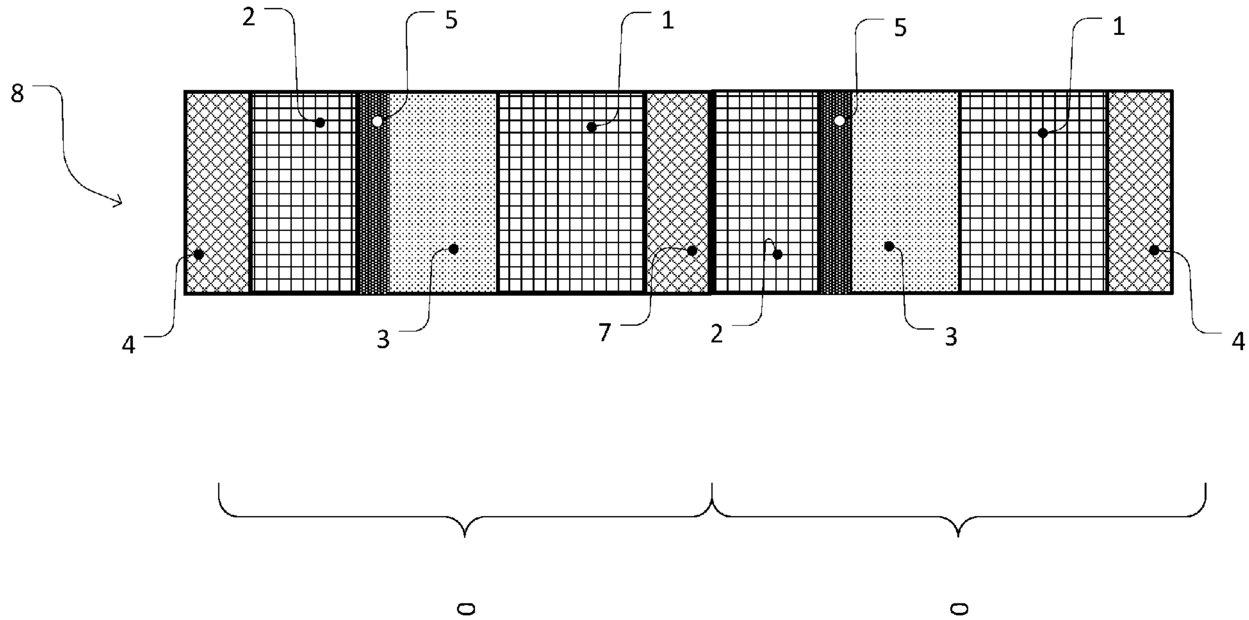


Fig. 4

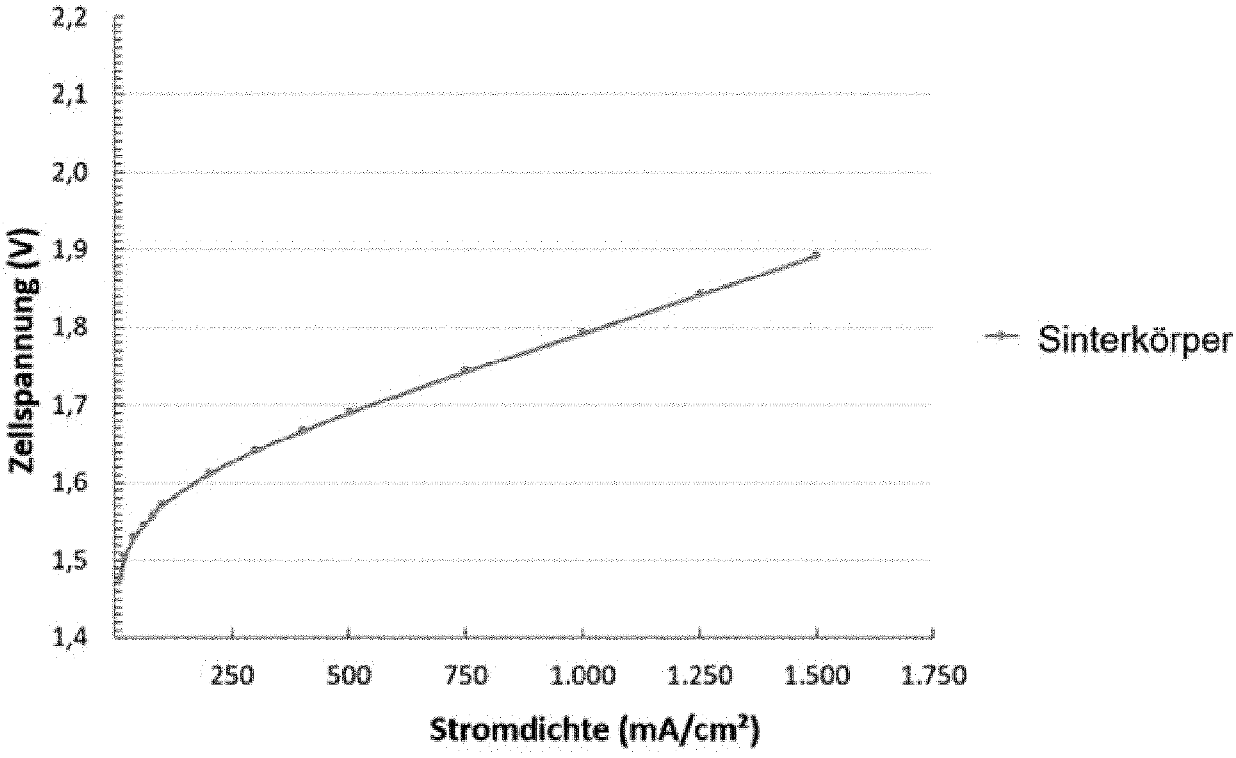
2,2
2,1
2,0
1,9
1,8
1,7
1,6
1,5
1,4
Zellspannung (V)
250
500
750
1.000
1.250
1.500
1.750
Stromdichte (mA/cm²)
Sinterkörper

Fig. 5

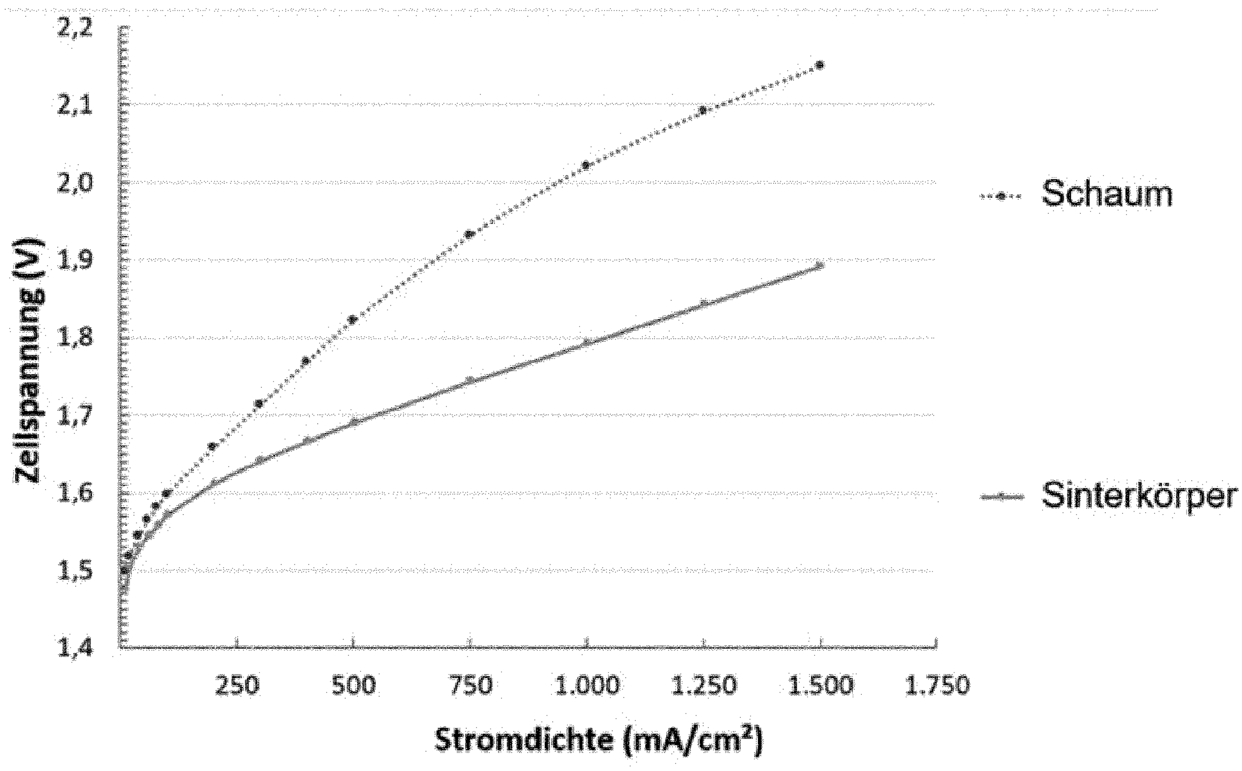
2,2
2,1
2,0
1,9
1,8
1,7
1,6
1,5
1,4
Zellspannung (V)
250
500
750
1.000
1.250
1.500
1.750
Stromdichte (mA/cm²)
Schaum
Sinterkörper

Fig. 6

Europäisches Patentamt
European Patent Office
Office européen des brevets

# EUROPÄISCHER RECHERCHENBERICHT

Nummer der Anmeldung
EP 24 17 3988

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2020/255959 A1 (HALL DAVID R [US] ET AL) 13. August 2020 (2020-08-13)<br>* das ganze Dokument *<br>----- | 1-23 | INV.<br>C25B1/04<br>C25B9/23<br>C25B9/75<br>C25B9/77<br>C25B11/031<br>C25B11/042<br>C25B11/046<br>C25B11/052<br>C25B11/061<br>C25B11/075<br>C25B11/089 |
| X | KIM JONG-HOON ET AL: "Low-cost and energy-efficient asymmetric nickel electrode for alkaline water electrolysis",<br>INTERNATIONAL JOURNAL OF HYDROGEN ENERGY, Bd. 40, Nr. 34, 26. Juli 2015 (2015-07-26), Seiten 10720-10725, XP093104268, AMSTERDAM, NL<br>ISSN: 0360-3199, DOI: 10.1016/j.ijhydene.2015.07.025<br>* das ganze Dokument *<br>----- | 1-23 | |
| A | ROCHA FERNANDO ET AL: "Effect of pore size and electrolyte flow rate on the bubble removal efficiency of 3D pure Ni foam electrodes during alkaline water electrolysis",<br>JOURNAL OF ENVIRONMENTAL CHEMICAL ENGINEERING,<br>Bd. 10, Nr. 3, 1. April 2022 (2022-04-01), Seite 107648, XP093104270, NL<br>ISSN: 2213-3437, DOI: 10.1016/j.jece.2022.107648<br>* das ganze Dokument *<br>----- | 1-23 | **RECHERCHIERTE SACHGEBIETE (IPC)**<br>C25B |
| A | HALL D E: "Alkaline Water Electrolysis Anode Materials",<br>JOURNAL OF THE ELECTROCHEMICAL SOCIETY,,<br>Bd. 132, Nr. 2,<br>1. Februar 1985 (1985-02-01), Seiten 41C-48C, XP001297761,<br>* das ganze Dokument *<br>----- | 1-22 | |

1

Der vorliegende Recherchenbericht wurde für alle Patentansprüche erstellt

| Recherchenort | Abschlußdatum der Recherche | Prüfer |
|---|---|---|
| München | 20. September 2024 | Ritter, Thomas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 24 17 3988

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-09-2024

| Im Recherchenbericht angeführtes Patentdokument | Datum der Veröffentlichung | Mitglied(er) der Patentfamilie | Datum der Veröffentlichung |
|---|---|---|---|
| US 2020255959 A1 | 13-08-2020 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 3453785 A1
- WO 2020260370 A1
- WO 2016142382 A1
- EP 4181240 A1
- WO 2021013694 A1
- EP 4032934 A1
- EP 4059988 A1
- WO 2011004343 A1
- EP 3770201 A1


### In der Beschreibung aufgeführte Nicht-Patentliteratur


- **MILLER, HAMISH ANDREW et al.** Green hydrogen from anion exchange membrane water electrolysis: a review of recent developments in critical materials and operating conditions. *Sustainable Energy Fuels,* 2020, vol. 4, 21
- **ROCHA FERNANDO et al.** Effect of pore size and electrolyte flow rate on the bubble removal efficiency of 3D pure Ni foam electrodes during alkaline water electrolysis. *JOURNAL OF ENVIRONMENTAL CHEMICAL ENGINEERING,* 01. April 2022, vol. 10 (3), ISSN 2213-3437, 107648